(19) Europäisches Patentamt
European Patent Office
Office européen des brevets

(11) EP 1 542 299 A1

(12) EUROPEAN PATENT APPLICATION
published in accordance with Art. 158(3) EPC

(43) Date of publication:
**15.06.2005 Bulletin 2005/24**

(21) Application number: **03797550.5**

(22) Date of filing: **04.09.2003**

(51) Int Cl.[7]: **H01M 8/02**, H01M 8/10, H01B 1/06, H01B 13/00

(86) International application number:
**PCT/JP2003/011322**

(87) International publication number:
**WO 2004/027909 (01.04.2004 Gazette 2004/14)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.09.2002 JP 2002275478**
**07.04.2003 JP 2003103237**

(71) Applicant: **KANEKA CORPORATION**
**Osaka-shi, Osaka 530-8288 (JP)**

(72) Inventors:
- **KUROMATSU, Hidekazu**
**Settsu-shi, Osaka 566-0072 (JP)**
- **YAMANE, Tomokazu**
**Settsu-shi, Osaka 566-0072 (JP)**
- **NAMURA, Kiyoyuki**
**Nagaokakyo-shi, Kyoto 617-0837 (JP)**

(74) Representative: **Hubert, Philippe et al**
**Cabinet Beau de Loménie**
**158, rue de l'Université**
**75340 Paris Cédex 07 (FR)**

# (54) PROTON CONDUCTING POLYMER FILM AND METHOD FOR PRODUCTION THEREOF

(57) An object of the present invention is to provide a proton conducting polymer membrane that has excellent mechanical properties and high methanol barrier properties, in addition to high proton conductivity, and is useful as an electrolyte in polymer electrolyte fuel cells and direct methanol fuel cells. The present invention provides a proton conducting polymer membrane having a product of a proton conductivity at 23°C and a methanol barrier coefficient at 25°C in an aqueous methanol solution of a specified concentration being a specified value or more. The present invention also provides a proton conducting polymer membrane having an ion exchange capacity of 0.3 milli-equivalent/g or more, and having a crystalline phase.



Printed by Jouve, 75001 PARIS (FR)

## Description

Technical Field

The present invention relates to a proton conducting polymer membrane and a method for manufacturing the same.

Background Art

A proton conducting polymer membrane is a maj or component of electrochemical elements for polymer electrolyte fuel cells, humidity sensors, gas sensors, electrochromic display devices and the like. Among these electrochemical elements, polymer electrolyte fuel cells are expected as one of the pillars of a future, new energy technology. A polymer electrolyte fuel cell (PEFC or PEMFC) using a proton conducting polymer membrane composed of a polymeric compound as an electrolyte membrane is studied for applications in mobile bodies such as automobiles, home cogeneration systems, compact portable equipment for consumers and the like, because of features such as operation in low temperatures and possibility of size and weight reduction. In particular, a fuel-cell vehicle mounting a PEFC has features such as high energy-efficiency and small carbon dioxide emissions, and has been attracting a growing social interest as the ultimate ecology-car. Moreover, a direct methanol fuel cell (DMFC) using methanol as fuel has features such as simple structure, easiness of fuel supply and maintenance and high energy density, and is expected for applications in compact portable equipment for consumers such as cellular phones and notebook computers as a substitute for lithium ion secondary batteries.

A styrene-based cation-exchange membrane was developed as a proton conducting polymer membrane in 1950s. However, this styrene-based cation-exchange membrane is poor in stability under the environment for operating fuel cells, and it was impossible to manufacture a fuel cell with a sufficient life using this membrane. Perfluorocarbon sulfonic acid membranes typified by Nafion (registered trade mark of EI du Pont de Nemours and Company, the same hereinafter) have been developed as a proton conducting membrane having practical stability and proposed for applications in many electrochemical elements such as PEFCs. Perfluorocarbon sulfonic acid membranes have high proton conductivity and are excellent in chemical stability such as acid resistance and oxidation resistance. However, they have disadvantages in that it is difficult to manufacture them and they are very expensive. Furthermore, perfluorocarbon sulfonic acid membranes exhibit high permeation (or crossover) of hydrogen-containing liquid such as methanol that is considered promising as fuel for fuel cells to be mounted on portable equipment for consumers, which is so called a chemical short-circuit reaction. This causes reduction of not only a cathode potential but also fuel efficiency, and so this is a maj or factor in the reduction of cell properties. Therefore, there are many problems in using such perfluorocarbon sulfonic acid membranes as an electrolyte membrane in direct methanol fuel cells. Moreover, fluorine-containing compounds impose a heavy load on the environment when they are synthesized and are discarded, and so they are not necessarily desirable for components in fuel cells or the like that are designed in consideration of the problem of the environment.

Under such a background, there have been proposed various proton conducting polymer membranes of a non-perfluorocarbon sulfonic acid-type composed of sulfonated aromatic polymers or the like, as proton conducting polymer membranes that can be easily manufactured and are inexpensive. As representative examples, there are proposed sulfonates of heat-resistant aromatic polymers such as sulfonated polyether ether ketones (refer to, for example, Japanese Patent Laid-Open No. 06-93114), sulfonated polyether sulfones (refer to, for example, Japanese Patent Laid-Open No. 10-45913), sulfonated polysulfones (referto, for example, Japanese Patent Laid-Open No. 09-245818) and sulfonated polyimides (refer to, for example, National Publication of International Patent Application No. 00-510511). Further, there is proposed a proton conducting polymer membrane composed of a sulfonated SEBS (styrene-(ethylene-butylene)-styrene) which is less expensive and mechanically and chemically stable (refer to Japanese Patent Laid-Open No. 10-503788). These sulfonated hydrocarbon polymer membranes can be easily manufactured at a low cost. However, the proton conductivity of these membranes is insufficient for use as the electrolyte membrane in PEFC that requires high proton conductivity. If an increased amount of proton conducting substituents such as a sulfonic acid group is introduced in order to improve the proton conductivity, handling properties will be considerably impaired, because mechanical properties of these membranes are reduced (reduction of strength and/or elongation); the membranes become water-soluble; or water absorption of the membranes is increased, thereby considerably swelling the membranes. Moreover, there is a similar tendency also to methanol that is promising as fuel for fuel cells for compact portable equipment, which may limit the use of these membranes in this application.

There is also proposed a proton conducting material based on polyphenylene sulfide, as a sulfonated hydrocarbon polymer with chemical and thermal stability. However, since polyphenylene sulfide is substantially insoluble in solvents, it is poor in processability such as membrane-forming properties compared with other proton conducting materials that are soluble in solvents. For example, U.S. Patent No. 4,110,265 discloses a method in which polyphenylene sulfide is reacted with oleum to prepare sulfonated polyphenylene sulfide for use as s cation exchange material. However, since this material is a crosslinked polymer that is insoluble in a solvent, it is difficult to use it by further processing. Moreover, National Publication of International Patent Application No. 11-510198 proposes a sulfonated polyphenylene sulfide that is soluble in an aprotic polar solvent. This patent discloses a method for preparing a polymer that can be easily processed into a film by imparting solubility in an aprotic polar solvent by modifying polyphenylene sulfide. However, the method disclosed in this patent includes various steps such as modification (sulfonation) of polyphenylene sulfide, recovery of a modified product by precipitation and drying, preparation of an aprotic polar solvent solution, formation of a membrane and removal of the solvent.

Furthermore, WO02/062896 discloses a method for manufacturing a sulfonated aromatic polymer membrane such as a sulfonated polyphenylene sulfide. It describes the use of chlorosulfonic acid as a sulfonating agent and dichloromethane as a solvent in the method for manufacturing a sulfonated aromatic polymer membrane. However, it can be easily assumed that a sulfonated polymer membrane obtained by this manufacturing method will also have increased methanol permeation when an increased amount of proton conducting substituents such as a sulfonic acid group is introduced in order to obtain high proton conductivity. Thus, although the electrolyte membrane in direct methanol fuel cells is required to suppress methanol permeation without reducing proton conductivity, the proton conductivity and methanol barrier properties are in tradeoff relationship, and so it is difficult that these properties are made compatible with each other.

Moreover, since halogenated hydrocarbons having low carbon atoms such as dichloromethane have a low boiling point, it can be easily assumed that auxiliary facilities are required for preventing evaporation of a solvent, recovering an evaporated solvent and the like until a sulfonated polymer membrane is obtained, resulting in an increased manufacturing cost.

Disclosure of the Invention

The present invention has been created in view of the above described problems, and it is an object of the present invention to provide a proton conducting polymer membrane having both proton conductivity and methanol barrier properties, which is useful as an electrolyte membrane in a polymer electrolyte fuel cell and a direct methanol fuel cell, and to provide a method for manufacturing the same.

Thus, a proton conducting polymer membrane of the present invention relates to a proton conducting polymer membrane having a product ((S·day)/μmol) of proton conductivity (S/cm) at 23°C and a methanol barrier coefficient ((cm·day)/μmol) at 25°C to an aqueous methanol solution of a specified concentration that satisfies at least one of either (A) or (B) below, wherein

(A) the product in an aqueous methanol solution of 10% by weight is $2.5\times10^{-4}$ (S·day)/μmol or more, or
(B) the product in an aqueous methanol solution of 64% by weight is $4.5\times10^{-5}$ (S·day)/μmol or more.

Furthermore, the present invention relates to a proton conducting polymer membrane having an ion exchange capacity of 0.3 milli-equivalent/g or more, and having a crystalline phase.

The above described proton conducting polymer membrane comprises a sulfonic acid group.

The above described proton conducting polymer membrane preferably comprises a hydrocarbon polymer, and further preferably comprises a crystalline aromatic polymer. More preferably, the crystalline aromatic polymer is polyphenylene sulfide.

The above described proton conducting polymer membrane preferably has an elongation at break as determined according to JIS K 7127 of 10% or more.

Moreover, the proton conducting polymer membrane has a proton conductivity at 23°C of $1.0\times10^{-3}$ S/cm or more, and preferably $1.0\times10^{-2}$ S/cm or more.

The above described proton conducting polymer membrane preferably has a methanol barrier coefficient at 25°C to an aqueous methanol solution of 64% by weight of $3.0\times10^{-4}$ (cm·day)/μmol or more.

Furthermore, the proton conducting polymer membrane is preferably irradiated with at least one radiation selected from the group consisting of γ-ray, electron beam and ion beam. Preferably, the dose of the above described radiation is from 10 kGy to 1,000 kGy.

The present invention also relates to a membrane-electrode assembly using the above described proton conducting polymer membrane.

At least one catalyst layer of the membrane-electrode assembly comprises a platinum and ruthenium catalyst.

The present invention also relates to a polymer electrolyte fuel cell using the above described proton conducting polymer membrane or the above described membrane-electrode assembly.

The present invention also relates to a direct methanol fuel cell using the above described proton conducting polymer membrane or the above described membrane-electrode assembly.

Moreover, the present invention relates to a method for manufacturing a proton conducting polymer membrane comprising bringing a film comprising a hydrocarbon polymer into contact with a sulfonating agent to obtain a proton conducting polymer membrane having a product ((S·day)/µmol) of proton conductivity (S/cm) at 23°C and a methanol barrier coefficient ((cm·day)/µmol) at 25°C to an aqueous methanol solution of a specified concentration that satisfies at least one of either (A) or (B) below, wherein

(A) the product in an aqueous methanol solution of 10% by weight is $2.5\times10^{-4}$ (S·day)/µmol or more, or
(B) the product in an aqueous methanol solution of 64% by weight is $4.5\times10^{-5}$ (S·day)/µmol or more.

Moreover, the present invention relates to a method for manufacturing a proton conducting polymer membrane comprising bringing a film comprising a crystalline hydrocarbon polymer into contact with a sulfonating agent to obtain a proton conducting polymer membrane that has an ion exchange capacity of 0. 3 milli-equivalent/g or more and has a crystalline phase.

The above described hydrocarbon polymer is a crystalline hydrocarbon polymer, and is preferably polyphenylene sulfide.

The above described sulfonating agent is at least one selected from the group consisting of chlorosulfonic acid, oleum, sulfur trioxide and concentrated sulfuric acid.

The above described film is preferably brought into contact with the sulfonating agent in the presence of a solvent, and more preferably, the solvent is a halide with three or more carbon atoms.

Further, the above described solvent is preferably at least one selected from the group consisting of 1-chloropropane, 1-bromopropane, 1-chlorobutane, 2-chlorobutane, 1-chloro-2-methylpropane, 1-bromobutane, 2-bromobutane, 1-bromo-2-methylpropane, 1-chloropentane, 1-bromopentane, 1-chlorohexane, 1-bromohexane, chlorocyclohexane and bromocyclohexane, and is more preferably 1-chlorobutane.

The above described sulfonating agent is sulfur trioxide, and a film comprising a hydrocarbon polymer is brought into contact with a gas containing sulfur trioxide.

Furthermore, the proton conducting polymer membrane is preferably irradiated with at least one radiation selected from the group consisting of γ-ray, electron beam and ion beam, and more preferably, the dose of the above described radiation is from 10 kGy to 1,000 kGy.

Brief Description of the Drawings

Figure 1 is a sectional view of an essential part of a membrane-electrode assembly of the present invention;
Figure 2 is a sectional view of an essential part of a polymer electrolyte fuel cell (direct methanol fuel cell) of the present invention;
Figure 3 is a sectional view of an essential part of a direct methanol fuel cell of the present invention;
Incidentally, in Figures 1 to 3, 1 denotes a proton conducting polymer membrane; 2 and 3 denote binder layers; 4 and 5 denote catalyst layers; 6 and 7 denote diffusion layers; 8 and 9 denote catalyst loaded gas diffusion electrodes; 10 denotes a membrane-electrode assembly; 11 and 12 denote separators; 13 denotes a fuel channel; 14 denotes an oxidizer channel; 15 denotes a fuel tank; and 16 denotes a support.
Figure 4 is an X-ray diffraction chart of a proton conducting polymer membrane in Example 1;
Figure 5 is an X-ray diffraction chart of a proton conducting polymer membrane in Example 2;
Figure 6 is an X-ray diffraction chart of a proton conducting polymer membrane in Example 3;
Figure 7 is an X-ray diffraction chart of a proton conducting polymer membrane in Example 17;
Figure 8 is an X-ray diffraction chart of a proton conducting polymer membrane in Comparative Example 3; and
Figure 9 is an X-ray diffraction chart of a proton conducting polymer membrane in Comparative Example 4.

Best Mode for Carrying Out the Invention

A proton conducting polymer membrane of the present invention preferably has a product ((S·day)/µmol) of proton conductivity (S/cm) at 23°C and a methanol barrier coefficient ((cm·day)/µmol) at 25°C to an aqueous methanol solution of a specified concentration that satisfies at least one of either (A) or (B) below, wherein

(A) the product in an aqueous methanol solution of 10% by weight is $2.5\times10^{-4}$ (S·day)/µmol or more, or
(B) the product in an aqueous methanol solution of 64% by weight is $4.5\times10^{-5}$ (S·day)/µmol or more.

The proton conductivity in the present invention indicates the mobility of proton ($H^+$) in a proton conducting

polymer membrane. It can generally be calculated by measuring the resistance of a proton conducting polymer membrane using a known alternating current impedance method. The methanol barrier coefficient indicates the difficulty of methanol permeation through a proton conducting polymer membrane. The methanol barrier coefficient is defined by the reciprocal of the methanol permeation coefficient of a proton conducting polymer membrane determined by a known method. As an example, a commercially available membrane permeation experimental apparatus is used as described below. Ion-exchanged water and an aqueous methanol solution of a specified concentration are separated with a proton conducting polymer membrane. After a lapse of predetermined time, the amount of methanol permeated to the side of ion-exchanged water is quantified by a gas chromatograph, from which the methanol permeation coefficient is determined. The methanol barrier coefficient can be calculated by calculating the reciprocal of the methanol permeation coefficient. A flow chart for calculating the methanol barrier coefficient is shown below.

Note that since the methanol barrier coefficient varies with the concentration of an aqueous methanol solution to be used, it is necessary that the methanol barrier coefficient have a desired value in the concentration of an aqueous methanol solution that is actually used.

Calculation of Methanol barrier coefficient

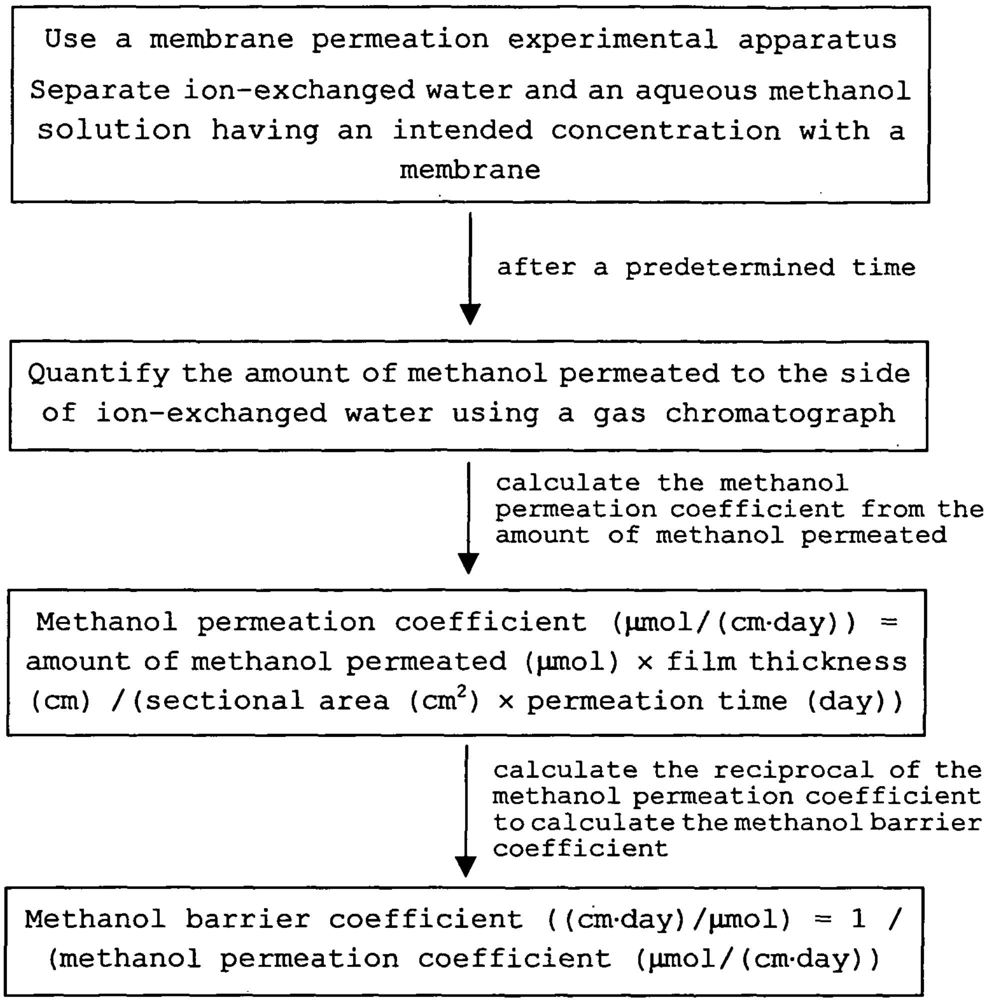


In order to achieve excellent power generation properties using a proton conducting polymer membrane of the present invention as an electrolyte membrane in direct methanol fuel cells in which an aqueous methanol solution is used as a fuel, there are required not only high proton conductivity, but also prevention of the reduction of cell properties due to the permeation of methanol that is a fuel, in other words, high methanol barrier properties. Since a proton conducting polymer membrane of the present invention has a product of the proton conductivity and the methanol barrier coefficient of a specific value or more, it is possible for the membrane to exhibit excellent performance as the electrolyte membrane in direct methanol fuel cells without deteriorating the performance due to excessively low proton

conductivity or an excessive amount of methanol permeated.

For example, when a proton conducting polymer membrane of the present invention is compared with a membrane that has the same proton conductivity and lower methanol barrier properties and in which the above described (A) and (B) are not satisfied, the membrane of the present invention exhibits a smaller loss of fuel due to methanol permeation, resulting in smaller methanol supply required for satisfying power generation properties of a certain level. In addition, this allows auxiliary facilities such as a fuel tank to be designed in a smaller volume, which can improve the energy density by weight and the energy density by volume of a direct methanol fuel cell. Further, it is preferable that the deterioration of performance due to the methanol permeated can be suppressed.

Moreover, when a proton conducting polymer membrane of the present invention is compared with a membrane that has the same methanol barrier properties and lower proton conductivity and in which the above described (A) and (B) are not satisfied, the membrane of the present invention can exhibit excellent power generation properties because of superior proton conductivity of the membrane according to the present invention, in the case of supplying the same amount of methanol. This allows the membrane area and the number of cells that are required for obtaining necessary properties to be reduced. Preferably, this in turn allows a fuel cell body to be reduced in size and weight, thus allowing improvement of the energy density by weight and the energy density by volume of a direct methanol fuel cell.

In the present invention, the product of proton conductivity at 23°C to an aqueous methanol solution of 10% by weight and a methanol barrier coefficient at 25°C to an aqueous methanol solution of 10% by weight is $2.5\times10^{-4}$ (S·day)/μmol or more. There is no specific upper limit to the product, but it is preferably from $2.5\times10^{-4}$ (S·day)/μmol to $2.5\times10^{-1}$ (S·day)/μmol.

In addition, in the present invention, the product of proton conductivity at 23°C to an aqueous methanol solution of 64% by weight and a methanol barrier coefficient at 25°C to an aqueous methanol solution of 64% by weight is $4.5\times10^{-5}$ (S·day)/μmol or more. There is no specific upper limit to the product, but it is preferably from $4.5\times10^{-5}$ (S·day)/μmol to $4.5\times10^{-2}$ (S·day)/μmol.

Furthermore, a proton conducting polymer membrane of the present invention preferably has an ion exchange capacity of 0.3 milli-equivalent/g or more and has a crystalline phase. The proton conducting polymer membrane, when for example it contains a sulfonic acid group as a proton conducting substituent, refers to those which have a predetermined amount of sulfonic acid group mainly in an amorphous phase of a crystalline polymer and in which a crystalline phase derived from the above described crystalline polymer remains after the polymer is processed to a membrane form. When the ion exchange capacity is lower than the above described range, the proton conductivity of a proton-conducting polymer membrane may be reduced. Known methods for determining the degree of crystallinity can be used for determining whether a proton-conducting polymer membrane of the present invention has a crystalline phase or not. For example, a specific volume method (a density method), X-ray diffraction, an infrared absorption spectra method, a nuclear magnetic resonance method (NMR), calorimetry or the like can be used. A proton-conducting polymer membrane of the present invention may be those in which crystalline peaks can be proved by X-ray diffraction. Alternatively, the degree of crystallinity may be determined from melting endotherm or recrystallization exotherm that can be measured by differential scanning calorimetry (DSC) or differential thermal analysis (DTA) to prove the presence or absence of a crystalline phase.

The degree of crystallinity of a proton-conducting polymer membrane of the present invention is not particularly limited, but it is preferable that there remains about 5% of the saturated degree of crystallinity inherent in the crystalline hydrocarbon polymer composing the crystalline polymer membrane. Further, it is more preferably that there remain about 20% or more of the saturated degree of crystallinity. When the degree of crystallinity is below 5% of the saturated degree of crystallinity, properties of a proton-conducting polymer membrane, particularly mechanical properties typified by tensile elongation and methanol barrier properties, may be reduced to lower values than a desired value. For example, in the case of polyphenylene sulfide, the saturated degree of crystallinity is 60%. For other crystalline polymers also, it is possible to refer the values described in publicly known literatures.

A proton-conducting polymer membrane of the present invention essentially contains in the membrane a substituent and/or a substance that can conduct a proton. The substituent that can conduct a proton includes a phosphoric acid group, a carboxylic acid group, a phenolic hydroxy group or the like, other than the above described sulfonic acid group. Among these groups, a sulfonic acid group and/or a substituent containing a sulfonic acid group is preferred, in consideration of easiness of introducing a substituent and properties typified by the proton conductivity of a membrane obtained.

In the present invention, a sulfonic acid group refers to a sulfonic acid group represented by formula (1) and/or a substituent containing a sulfonic acid group represented by formula (2):

$$-SO_3H \qquad (1)$$

$$-R-SO_3H \quad (2)$$

wherein R denotes a divalent organic group comprising at least one bond unit selected from a group consisting of alkylene, halogenated alkylene, arylene and halogenated arylene, or it may include an ether bond.

Moreover, a substance that can conduct a proton includes a strongly acidic solution such as sulfuric acid and phosphoric acid, an inorganic oxide such as tungsten oxide hydrate ($WO_3 \cdot nH_2O$) and molybdenum oxide hydrate ($MoO_3 \cdot nH_2O$) and an inorganic solid acid such as tungstophosphoric acid molybdophosphoric acid.

A proton-conducting polymer membrane of the present invention preferably comprises a hydrocarbon polymer in consideration of methanol barrier properties and the like. Examples of the hydrocarbon polymer may include polyacrylamide, polacrylonitrile, polyarylethersulfone, poly(allyl phenyl ether), polyethylene oxide, polyetherethersulfone, polyetherketone, polyetherketoneketone, polyvinylchloride, poly(diphenylsiloxane), poly(diphenylphosphazene), polysulfone, polyparaphenylene, polyvinyl alcohol, poly(phenylglycidyl ether), poly(phenylmethylsiloxane), poly(phenylmethylphosphazene), polyphenylene oxide, polyphenylene sulfoxide, polyphenylene sulfide sulfone, polyphenylene sulfone, polybenzimidazole, polybenzoxazole, polybenzothiazole, poly(α-methylstyrene), polystyrene, styrene-(ethylene-butylene)styrene copolymers, styrene-(polyisobutylene)-styrene copolymers, polyl,4-biphenyleneetherethersulfone, polyaryleneethersulfone, polyetherimide, cyanate resins, polyethylene, polypropylene, polyamide, polyacetal, polybutylene terephthalate, polyethylene terephthalate, syndiotactic polystyrene, polyphenylene sulfide, polyetheretherketone, polyethernitrile and the like. Among others, the hydrocarbon polymer is preferably at least one selected from the group consisting of polybenzimidazole, polybenzoxazole, polybenzothiazole, polysulfone, polyetherethersulfone, polyarylethersulfone, polyphenylene sulfone, polyphenylene oxide, polyphenylene sulfoxide, polyphenylene sulfide sulfone, polyparaphenylene, polyetherketone, polyetherketoneketone, cyanate resins, polyethylene, polypropylene, polyamide, polyacetal, polybutylene terephthalate, polyethylene terephthalate, syndiotactic polystyrene, polyphenylene sulfide, polyetheretherketone and polyethernitrile, in consideration of easiness of introducing a sulfonic acid group and/or a substituent containing a sulfonic acid group and properties of the membrane obtained such as proton conductivity, mechanical properties and chemical stability. Further, in the present invention, the hydrocarbon polymer is preferably a crystalline aromatic polymer such as syndiotactic polystyrene, polyphenylene sulfide and polyetheretherketone, in consideration of easiness of introducing a sulfonic acid group and/or a substituent containing a sulfonic acid group and properties of the membrane obtained such as proton conductivity, mechanical properties, chemical stability, barrier properties for fuel such as hydrogen and methanol, barrier properties for oxidizers such as oxygen and air, and the like. Furthermore, the hydrocarbon polymer is more preferably polyphenylene sulfide since it has high proton

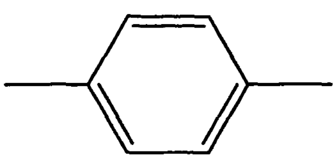
(4)

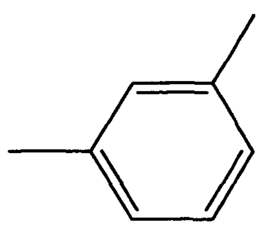
(5)

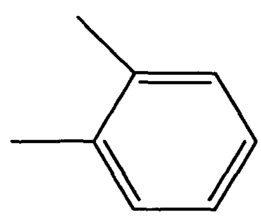
(6)

conductivity, excellent mechanical properties and high methanol barrier properties.

Polyphenylene sulfide of the present invention specifically comprises repeating structural units represented by formula (3) below:

$$-[Ar-S]_n- \quad (3)$$

wherein Ar denotes a divalent aromatic unit represented by formulas (4) through (6) below; and n denotes an integer of 1 or more.

In addition, a part of Ar for the above described polyphenylene sulfide may comprise any of the following structural units if necessary.

(1) An aromatic unit in which a part of hydrogen atoms thereof is replaced with at least one substituent selected

from the group consisting of an alkyl group, a phenyl group, an alkoxy group, a nitro group and a halogen group.
(2) A trifunctional phenyl sulfide unit.
(3) A crosslinking or a branch unit.

A proton conducting polymer membrane of the present invention preferably has an elongation at break according to JIS K 7127 of 10% or more, more preferably 15% or more and most preferably 20% or more. When a proton conducting polymer membrane having an elongation at break of less than 10% is used as an electrolyte, for example, in polymer electrolyte fuel cells or direct methanol fuel cells, the membrane may break because it cannot sufficiently follow a dimensional deformation due to the swelling thereof by absorbing water contained in a fuel or an oxidizer or produced in the reaction. In order to set the elongation at break of a proton conducting polymer membrane in the above described range, it needs to be appropriately set in consideration of the type of a hydrocarbon polymer or a crystalline aromatic polymer that is a component of the proton conducting polymer membrane, ion exchange capacity required for allowing the membrane to exhibit desired proton conductivity and the like. It is basically necessary to manufacture a proton conducting polymer membrane in which ion exchange capacity is optimized such that desired proton conductivity and elongation at break are satisfied, since the higher the ion exchange capacity is, the lower the elongation at break tends to be.

A proton conducting polymer membrane of the present invention preferably has an ion exchange capacity of 0.3 milli-equivalent/g or more, more preferably 0.5 milli-equivalent/g or more, most preferably 1.0 milli-equivalent/g or more. A proton conducting polymer membrane having an ion exchange capacity of less than 0.3 milli-equivalent/g is not preferred, since it may not exhibit desired proton conductivity. There is no specific upper limit to the ion exchange capacity of a proton conducting polymer membrane of the present invention. However, the ion exchange capacity is preferably from 0.3 milli-equivalent/g to 0.5 milli-equivalent/g.

A proton conducting polymer membrane of the present invention preferably has a proton conductivity at 23°C of $1.0\times10^{-3}$ S/cm or more, more preferably $1.0\times10^{-2}$ S/cm or more. When the proton conductivity is lower than $1.0\times10^{-3}$ S/cm, a proton conducting polymer membrane of the present invention may not exhibit adequate power generation properties in the case of using it as an electrolyte membrane in a polymer electrolyte fuel cell or a direct methanol fuel cell. There is no specific upper limit to the proton conductivity at 23°C of a proton conducting polymer membrane of the present invention. However, the proton conductivity at 23°C is preferably from $1.0\times10^{-3}$ S/cm to 1.0 S/cm, more preferably from $1.0\times10^{-2}$ S/cm to 1.0 S/cm.

In order to set the proton conductivity of a proton conducting polymer membrane in the above described range, the amount of a proton conducting substituent such as a sulfonic acid group or a proton conducting substance may be controlled in consideration of the type of a hydrocarbon polymer or a crystalline aromatic polymer that is a component of the proton conducting polymer membrane.

A methanol barrier coefficient of a proton conducting polymer membrane of the present invention varies with the concentration of an aqueous methanol solution used for measurement since the methanol barrier coefficient is not standardized with the methanol concentration. When an aqueous methanol solution of 64% by weight at 25°C is used, the methanol barrier coefficient is preferably $3.0\times10^{-4}$ (cm·day)/μmol or more, more preferably $5.0\times10^{-4}$ (cm·day)/μmol or more, most preferably $1.0\times10^{-3}$ (cm·day)/μmol or more. In the case of using a proton conducting polymer membrane, which has a methanol barrier coefficient of less than $3.0\times10^{-4}$ (cm·day)/μmol, as an electrolyte membrane in direct methanol fuel cells as described above, the membrane tends to exhibit degradation of performance caused by methanol permeation through the membrane. A proton conducting polymer membrane of the present invention preferably has a methanol barrier coefficient at 25°C to an aqueous methanol solution of 64% by weight of $3.0\times10^{-4}$ (cm·day)/μmol or more, and there is no specific upper limit to it. However, the methanol barrier coefficient at 25°C to an aqueous methanol solution of 64% by weight is more preferably from $3.\times10^{-4}$ (cm·day)/μmol to $3.0\times10^{-1}$ (cm·day)/μmol.

In order to set the methanol permeation coefficient of a proton conducting polymer membrane in the above described range, it needs to be appropriately set in consideration of the type of a hydrocarbon polymer or a crystalline aromatic polymer that is a component of the proton conducting polymer membrane, ion exchange capacity required for allowing the membrane to exhibit desired proton conductivity and the like. The amount of a proton conducting substituent such as a sulfonic acid group or a proton conducting substance may be basically controlled such that desired proton conductivity and a methanol permeation coefficient are satisfied, since the higher the ion exchange capacity is, the lower the methanol barrier coefficient tends to be.

A proton conducting polymer membrane of the present invention is preferably irradiated with at least one radiation selected from the group consisting of γ-ray, electron beam and ion beam. The proton conductivity tends to be improved by irradiating the above described proton conducting polymer membrane with radiation to modify it. Methanol barrier properties may also be improved. An electron beam is particularly preferred in terms of a radiation dose, transmission through a proton conducting polymer membrane, irradiation time (industrial continuous irradiation) and the like.

Irradiation atmosphere of the above described radiation may be selected from any of air, a non-oxygen atmosphere and a vacuum atmosphere, but air is preferred in consideration of productivity. In the present invention, an atmosphere may be appropriately set in which the irradiation does not cause degradation of a proton conducting polymer membrane. In addition, irradiation atmosphere and a membrane may be heated in order to effectively perform modification of a proton conducting polymer membrane by irradiation. In this case also, a condition may be appropriately set in which the proton conducting polymer membrane is not degraded.

Acceleration voltage of the above described radiation is preferably from 0.01 MeV to 5.0 MeV. When the acceleration voltage is lower than 0.01 MeV, the transmission of radiation through a proton conducting polymer membrane is reduced, and it tends to be difficult to obtain a membrane that is homogeneous throughout the membrane. Further, long irradiation is necessary in order to ensure a required irradiation dose, leading to considerable reduction in productivity. The acceleration voltage exceeding 5.0 MeVmay require an apparatus which is larger than necessary and may promote degradation of a proton conducting polymer membrane.

The irradiation dose of the above described radiation is preferably from 10 kGy to 1,000 kGy. When the irradiation dose is less than 10 kGy, adequate irradiation effect may not be exhibited. When it exceeds 1, 000 kGy, there is a tendency that the irradiation effect is saturated; irradiation time is extended; and degradation and reduction of properties of a proton conducting polymer membrane is involved.

As for the thickness of a proton conducting polymer membrane of the present invention, any thickness may be selected depending on applications. Thinner thickness is preferred in the range that the membrane has a practical mechanical strength in consideration of reducing internal resistance of the membrane, and in the range that the membrane has barrier properties to fuel and an oxidizer when it is used as an electrolyte membrane in a polymer electrolyte fuel cell. As for the properties as an electrolyte membrane, the resistance value as a membrane is reduced with the reduction of the thickness of the membrane if ion exchange capacity and proton conductivity are the same. Therefore, the thickness of a membrane is preferably from 5 μm to 200 μm, more preferably from 20 μm to 150 μm. When the thickness is less than 5 μm, there is a tendency that pin holes and a membrane fracture easily occur in use. Further, when used as an electrolyte membrane in polymer electrolyte fuel cells, barrier properties to fuel and an oxidizer may be insufficient, causing performance reduction. Furthermore, when used as an electrolyte membrane in direct methanol fuel cells, methanol barrier properties may be insufficient, causing performance reduction due to methanol permeation. On the other hand, when the thickness exceeds 200 μm, the resistance of a proton conducting polymer membrane may be increased, causing performance reduction.

Next, a membrane-electrode assembly of the present invention will be described by illustrating the drawing as an example. Figure 1 is a sectional view of an essential part of a membrane-electrode assembly using a proton conducting polymer membrane of the present invention. A membrane-electrode assembly 10 is composed of a proton conducting polymer membrane 1, binder layers 2 and 3 formed on both sides of the proton conducting polymer membrane 1 as necessary, and catalyst loaded gas diffusion electrodes 8 and 9 having catalyst layers 4 and 5 and diffusion layers 6 and 7, respectively, positioned outside the binder layers. Catalyst loaded gas diffusion electrodes 8 and 9 may include, but not limited to, a commercially available catalyst loaded gas diffusion electrode (for example, available from E-TEK, Inc., U.S.A).

In the present invention, a proton conducting polymer membrane of the present invention is used as the proton conducting polymer membrane 1.

The binder layers 2 and 3 may be the same or different, and may be formed or may not be formed, as necessary. Typically, known proton conducting polymers soluble in solvents are used such as perfluorocarbon sulfonic acid polymers typified by Nafion, sulfonated polyether ether ketones, sulfonated polyether sulfones, and sulfonated polyimides. These are used for joining (gluing) the proton conducting polymer membrane 1 to the catalyst layers 4 and 5. These materials are required to have proton conductivity, chemical stability and the like similar to a proton conducting polymer membrane, in addition to joining properties thereof to different materials.

The catalyst layers 4 and 5 may be the same or different, and a catalyst that has the capability for oxidizing a fuel to be used (such as hydrogen or methanol) is used as one of the catalysts. As the other catalyst, a catalyst having the capability for reducing a oxidizer to be used (such as oxygen or air) is used. Specifically, there are used those in which a precious metal catalyst such as platinum is supported on a conductive material with a high surface area such as activated carbon, carbon nanohorns and carbon nanotubes. In the case of using other materials than pure hydrogen as a fuel, a composite or alloy catalyst composed of platinum and ruthenium or the like is used in place of platinum in order to suppress the poisoning of a catalyst.

The diffusion layers 6 and 7 may be the same or different, and porous conductive materials such as carbon paper and carbon cloth are used as the diffusion layers. These may be subj ected to water-repellent treatment with a fluorine compound such as polytetrafluoroethylene, if necessary, in order to prevent pores to be clogged with water that is supplied or produced in an electrochemical reaction. Typically, the above described catalyst layers 4 and 5 are formed on these diffusion layers 6 and 7 using, as a binder, known proton conducting polymers soluble in solvents such as perfluorocarbon sulfonic acid polymers typified by Nafion, sulfonated polyether ether ketones, sulfonated polyether sulfones, and sulfonated polyimides, preparing catalyst loaded gas diffusion electrodes 8 and 9 for use in the assembly.

In the membrane-electrode assembly 10 of the present invention, at least one of the catalyst layers 4 and 5 preferably comprises a platinum and ruthenium catalyst. In the present invention, a material with high methanol barrier properties is preferably used as the proton conducting polymer membrane 1, thereby capable of preventing methanol that remains unreacted at one catalyst layer 4 from permeating through the proton conducting polymer membrane 1 to poison the catalyst in the other catalyst layer 5.

A known or any other method can be selected as a method for manufacturing the membrane-electrode assembly 10 of the present invention. For example, an organic solvent solution of a component of the binders 2 and 3 is applied on the catalyst layers 4 and 5 of the catalyst loaded gas diffusion electrodes 8 and 9, which are then placed on both surfaces of the proton conducting polymer membrane 1 after removing the solvent. Then, they can be subjected to hot pressing typically at a pressing temperature of about 120°C to 250°C using a press machine such as a hot press machine or a roll press machine, preparing the membrane-electrode assembly 10. Further, if necessary, the membrane-electrode assembly 10 may be prepared without using the binders 2 and 3.

Next, a polymer electrode fuel cell (a direct methanol fuel cell) using a proton conducting polymer membrane or a membrane-electrode assembly of the present invention will be described by illustrating the drawing as an example.

Figure 2 is a sectional view of an essential part of a polymer electrolyte fuel cell (a direct methanol fuel cell) using a proton conducting polymer membrane or a membrane-electrode assembly of the present invention.

This is composed of the membrane-electrode assembly 10 of the present invention, separators 11 and 12 placed outside the assembly and channels 13 and 14 formed in the separators for feeding a fuel gas or liquid and an oxidizer. A plate composed of carbon graphite or metal that has electrical conductivity, chemical stability and barrier properties to fuel and oxidizers is used as the separators 11 and 12. Moreover, these may be subjected to water-repellent treatment and corrosion-resistant treatment, if necessary. The channels 13 and 14 for feeding a fuel gas or liquid and an oxidizer are formed on the surface of the separators 11 and 13, composing a polymer electrode fuel cell (direct methanol fuel cell). The polymer electrode fuel cell is operated by feeding a gas essentially composed of hydrogen, or a gas or a liquid essentially composed of methanol into one channel 13, as a fuel gas or liquid, and feeding a gas containing oxygen (oxygen or air) into the other channel 14, as an oxidizer. When methanol is used as a fuel, the fuel cells are direct methanol fuel cells.

A polymer electrolyte fuel cell (a direct methanol fuel cell) of the present invention can be used singly or by laminating a plurality of fuel cells to form a stack, or can also form a fuel cell system in which these fuel cells are incorporated.

Further, a direct methanol fuel cell using a proton conducting polymer membrane of the present invention is described by illustrating the drawing as an example.

Figure 3 is a sectional view of an essential part of a direct methanol fuel cell comprising the proton conducting polymer membrane 1 or the membrane-electrode assembly 10 of the present invention. The membrane-electrode assembly 10 is placed in a plane in required numbers on both sides of a fuel (methanol or an aqueous methanol solution) tank 15 that has the function to fill and feed a fuel (methanol or an aqueous methanol solution). Further, on the outside of the membrane-electrode assembly, there are placed supports 16 in which oxidizer channels 14 are formed. The membrane-electrode assemblies are sandwiched between the supports to form cells and stacks of a direct methanol fuel cell.

Other than the above described examples, a proton conducting polymer membrane and a membrane-electrode assembly of the present invention can be used as an electrolyte membrane and amembrane-electrode assembly in direct methanol fuel cells which are publicly known in Japanese Patent Laid-Open No. 2001-313046, No. 2001-313047, NO. 2001-93551, No. 2001-93558, No. 2001-93561, No. 2001-102069, No. 2001-102070, No. 2001-283888, No. 2000-268835, No. 2000-268836, No. 2001-283892 and the like.

Next, a method for manufacturing a proton conducting polymer membrane of the present invention will be described.

A method for manufacturing a proton conducting polymer membrane of the present invention comprises a method for manufacturing a proton conducting polymer membrane having a product ((S·day)/μmol) of proton conductivity (S/cm) at 23°C and a methanol barrier coefficient ((cm·day)/μmol) to an aqueous methanol solution of a specified concentration at 25°C that satisfies at least one of either (A) or (B) below, wherein

(A) the product in an aqueous methanol solution of 10% by weight is $2.5\times10^{-4}$ (S·day)/μmol or more, or
(B) the product in an aqueous methanol solution of 64% by weight is $4.5\times10^{-5}$ (S·day)/μmol or more,

the method preferably comprising bringing a film comprising a hydrocarbon polymer into contact with a sulfonating agent.

Further, a method for manufacturing a proton conducting polymer membrane that has an ion exchange capacity of 0.3 milli-equivalent/g or more and has a crystalline phase preferably comprises bringing a film comprising a crystalline hydrocarbon polymer into contact with a sulfonating agent. Sulfonic acid groups are essentially introduced into an amorphous phase. This does not mean that no sulfonic acid groups are introduced into the crystalline phase of a film comprising a crystalline hydrocarbon polymer, but means that the crystalline phase remains in the film after sulfonic acid groups are introduced.

As for the thickness of a film comprising the above described hydrocarbon polymer or crystalline hydrocarbon polymer in the present invention, any thickness can be selected depending on applications. Thinner film thickness is preferred in consideration of introducing a sulfonic acid group uniformly throughout a film and reducing an internal resistance of a proton conducting polymer membrane. On the other hand, the thickness of a film that is too thin is not preferred in consideration of methanol barrier properties and handling properties. In consideration of the above, a film preferably has a thickness of from 1.2 μm to 350 μm. When the above described film thickness is less than 1.2 μm, manufacturing of the film is difficult, and there is a tendency that handling properties deteriorate, for example, wrinkles or fracture occurs during processing. When the thickness exceeds 350 μm, it is difficult to uniformly sulfonate throughout the film, and the resulting proton conducting polymer membrane has a higher internal resistance, which may reduce the proton conductivity.

Known sulfonating agents can be used as the sulfonating agent, such as chlorosulfonic acid, oleum, sulfur trioxide, sulfur trioxide- triethyl phosphate, concentrated sulfuric acid, trimethylsilyl chlorosulfate, trimethylbenzenesulfonic acid and the like. The sulfonating agent is preferably at least one selected from the group consisting of chlorosulfonic acid, oleum, sulfur trioxide and concentrated sulfuric acid, in consideration of industrial availability, easiness of introducing a sulfonic acid group and properties of the resulting proton conducting polymer membrane. Chlorosulfonic acid is more preferably used particularly in the present invention, because of easiness of introducing a sulfonic acid group, properties of the resulting membrane, industrial availability and the like.

Moreover, a method can be used in which a cyclic sulfur-containing compound such as propane sultone or 1,4-butane sultone is brought into contact with an aromatic unit in a hydrocarbon polymer in the presence of a catalyst such as aluminum chloride according to the Friedel-Crafts reaction by optimizing the reaction system to introduce a substituent comprising a sulfonic acid group such as a sulfopropyl group or a sulfobutyl group.

Moreover, a proton conducting polymer membrane of the present invention is preferably produced by contacting a film comprising the above described polymer with a sulfonating agent in the presence of a solvent. In the present invention, halides with three or more carbon atoms are preferably used as the solvent. Since halides with three or more carbon atoms have higher boiling points and hardly evaporate compared with halides with two or less carbon atoms such as dichloromethane and 1,2-dichloroethane that are generally used for the sulfonation of hydrocarbon compounds, use of these halides does not require auxiliary facilities for preventing evaporation of solvents or for recovering solvents evaporated, making it possible to reduce a production cost involved in the auxiliary facilities. In addition, these solvents are effective for maintaining methanol barrier properties of a resulting proton conducting polymer membrane at a certain level, and thus it is possible to obtain a proton conducting polymer membrane with both high proton conductivity and high methanol barrier properties. In particular, when a film comprising a crystalline polymer such as polyphenylene sulfide is used, the film hardly deteriorates during the production process, and preferably, it is possible to obtain a proton conducting polymer membrane excellent in proton conductivity, methanol barrier properties and mechanical properties.

When for example polyphenylene sulfide is used as a hydrocarbon polymer, examples of halides having three or more carbon atoms that can be used in the present invention, in place of conventionally used halogenated hydrocarbons having low carbon atoms such as dichloromethane and 1,2-dichloroethane, may include 1-chloropropane, 1-bromopropane, 1-iodopropane, 1-chlorobutane, 2-chlorobutane, 1-chloro-2-methylpropane, 1-bromobutane, 2-bromobutane, 1-bromo-2-methylpropane, 1-iodobutane, 2-iodobutane, 1-iodo-2-methylpropane, 1-chloropentane, 1-bromopentane, 1-iodopentane, 1-chlorohexane, 1-bromohexane, 1-iodohexane, chlorocyclohexane, bromocyclohexane, iodocyclohexane and the like. Particularly, in consideration of easiness in handling solvents to be used and properties of a proton conducting polymer membrane to be obtained, the above described solvent is preferably at least one selected from the group consisting of 1-chloropropane, 1-bromopropane, 1-chlorobutane, 2-chlorobutane, 1-chloro-2-methylpropane, 1-bromobutane, 2-bromobutane, 1-bromo-2-methylpropane, 1-chloropentane, 1-bromopentane, 1-chlorohexane, 1-bromohexane, chlorocyclohexane and bromocyclohexane. The solvent is more preferably at least one selected from 1-chloropropane, 1-chlorobutane, 2-chlorobutane, 1-chloro-2-methylpropane, 1-chloropentane, 1-chlorohexane and chlorocyclohexane, in terms of industrial availability. Among the above described solvents, 1-chlorobutane is preferred, in terms of industrial availability and properties of a proton conducting polymer membrane to be obtained.

The amount of usage of a sulfonating agent is preferably from 0.5 to 30 equivalents, more preferably from 0.5 to 15 equivalents, relative to the aromatic unit in a hydrocarbon polymer. When the amount of usage of the sulfonating agent is less than 0.5 equivalent, there is a tendency that the amount of the sulfonic acid group to be introduced is reduced and the time required for the introduction is extended. On the other hand, when the amount of usage of the

sulfonating agent exceeds 30 equivalents, there is a tendency that practical properties of a proton conducting polymer membrane are rather impaired; for example, a polymer film is chemically deteriorated, reducing the mechanical strength of a proton conducting polymer membrane to be obtained, which results in the difficulty of handling of the membrane; and methanol barrier properties are reduced due to too much amount of introduction of a sulfonic acid group.

The concentration of a sulfonating agent in a solvent may be appropriately set in consideration of a target amount of introduction of a sulfonic acid group and reaction conditions (temperature and time). Specifically, the concentration is preferably from 0.1% by weight to 10% by weight, more preferably from 0.2% by weight to 5% by weight. When the concentration is lower than 0.1% by weight, the sulfonating agent is hardly brought into contact with the aromatic unit in a polymer. As a result, there is a tendency that a sulfonic acid group may not be introduced as desired, or it may take too much time to introduce the sulfonic acid group. On the other hand, when the concentration exceeds 10% by weight, there is a tendency that the sulfonic acid group may be unevenly introduced, or a resultant proton conducting polymer membrane may have poor mechanical properties.

Moreover, although reaction temperature and reaction time for contacting the above described ingredients are not particularly limited, the reaction temperature and reaction time are preferably set at a range from 0°C to 100°C, more preferably from 10°C to 30°C, and preferably set at 0.5 hour ormore, more preferably from 2 hours to 100 hours, respectively. When the reaction temperature is lower than 0°C, it may be necessary to take some measures for facilities such as cooling, and the reaction time may tends to be too long. When the reaction temperature exceeds 100°C, there is a tendency that the reaction may proceed excessively, or a side-reaction may occur, reducing membrane properties. Further, when the reaction time is less than 0.5 hour, the contact of the sulfonating agent with the aromatic unit in a polymer may be insufficient, and so there is a tendency that a sulfonic acid group may not be introduced as desired. When the reaction time exceeds 100 hours, there is a tendency that productivity is considerably reduced, and that a large improvement in membrane properties cannot be expected. In actuality, the reaction temperature and reaction time may be set so that a proton conducting polymer membrane with desired properties can be effectively produced, in consideration of a reaction system such as a sulfonating agent and a solvent to be used, a target production volume and the like.

A method for manufacturing a proton conducting polymer membrane of the present invention preferably comprises washing with water in order to remove an unreacted sulfonating agent and a solvent after the above described step for introducing a sulfonic acid group. At this time, preferably, a proton conducting polymer membrane after the step for introducing a sulfonic acid group is not recovered, but is continuously subjected to washing followed by drying under a suitable condition to obtain the proton conducting polymer membrane. Alternatively, in place of the washing with water, a proton conducting polymer membrane may be obtained by neutralization washing with an aqueous sodium hydroxide solution or the like followed by acid treatment.

Moreover, in a method for manufacturing a proton conducting polymer membrane of the present invention, a sulfonating agent is preferably sulfur trioxide, and it is preferable that a film comprising a hydrocarbon polymer be brought into contact with a gas containing sulfur trioxide to manufacture the proton conducting polymer membrane. In this case, the step for introducing a sulfonic acid group may involve dry treatment, in which solvent needs not be used for sulfonation, and so steps and cost required for raw materials and regeneration treatment can be reduced.

A method for manufacturing a proton conducting polymer membrane of the present invention may be performed continuously. Specifically, a film comprising a hydrocarbon polymer that is an obj ect to be treated is continuously supplied to a reaction vessel in which it is reacted with a sulfonating agent. Further, if necessary, a washing and drying steps may be continuously performed without performing purification and recovery of a proton conducting polymer membrane at a midpoint in the process. Productivity of the proton conducting polymer membrane will be improved by this method.

In a method for manufacturing a proton conducting polymer membrane of the present invention, it is possible to introduce a sulfonic acid group into a polymer in a film (membrane) form by contacting a polymer film with a sulfonating agent in a reaction vessel. Therefore, in comparison with a conventional method in which a sulfonated polymer is synthesized in a homogeneous reaction system and then processed into a membrane form, the method of the present invention can preferably omit steps such as recovery, purification and drying of a reaction product, as well as steps such as dissolution of a sulfonated polymer into a solvent, application thereof on a support and removal of the solvent. Furthermore, the film is continuously supplied, thereby improving the productivity of the same.

Moreover, peripheral equipment is prevented from corrosion due to a sulfonating agent and poor film-handling properties due to a sulfonating agent are improved, by performing the removal and washing of the sulfonating agent deposited and/or contained in the film immersed in a reaction vessel. Conditions for the removal and washing may be appropriately set in consideration of the types of a sulfonating agent and hydrocarbon polymer to be used. Specifically, a remaining sulfonating agent may be inactivated by washing with water, or may be subjected to neutralization treatment with alkali.

Moreover, a proton conducting polymer membrane can be recovered in a practically usable form by continuously drying the obtained proton conducting polymer membrane. The drying conditions may be appropriately set in

consideration of the type of a polymer film to be used and the properties of a proton conducting polymer membrane to be obtained. Since a sulfonic acid group exhibits high hydrophilicity, the proton conducting polymer membrane may be considerably swelled with water in the washing process. This may cause shrinkage during drying, leading to irregularities such as wrinkles and blisters. Therefore, at the time of drying, it is preferable that the proton conducting polymer membrane be dried under a suitable tension along the surface thereof. Alternatively, the membrane may be slowly dried under a controlled humidity in order to prevent quick drying.

Depending on a sulfonating agent to be used and reaction conditions for sulfonation, side reactions may occur. For example, when polyphenylene sulfide is used as a hydrocarbon polymer, a sulfide unit (-S-) in a polymer filmmay be oxidized to a sulfoxide unit (-SO-) or a sulfone unit ($-SO_2-$) a sulfoxide unit (-SO-) may be oxidized to a sulfone unit ($-SO_2-$); or hydrogen in a phenylene unit may be replaced by a substituent such as -Cl. However, a structural unit formed as a result of the above described side reactions may be contained if it does not considerably reduce the properties of the resulting proton conducting polymer membrane.

Furthermore, in a method for manufacturing a proton conducting polymer membrane of the present invention, the proton conducting polymer membrane prepared by the above described method is preferably irradiated with at least one radiation selected from the group consisting of γ-ray, electron beam and ion beam. Preferably, the dose of the radiation is from 10 kGy to 1,000 kGy.

In addition, when manufacturing a proton conducting polymer membrane that is manufactured according to a manufacturing method of the present invention, the polymer membrane may contain a suitable amount of additives such as plasticizers, antioxidants, antistatic agents, antibacterial agents, lubricants, surface active agents and various fillers.

[Examples]

Hereinafter, the present invention will be more specifically described with reference to examples. However, the present invention is not limited by these examples at all, and can be appropriately changed within the range that the gist thereof is not changed.

<Determination method of ion exchange capacity>

A proton conducting polymer membrane (about 10 mm × 40 mm) is immersed in 20 ml of a saturated aqueous sodium chloride solution at 25°C to allow to them to react with each other at 60°C for 3 hours in a water bath. They are cooled to 25°C; the membrane is adequately washed with ion-exchanged water; and all of the saturated aqueous sodium chloride solution and the washing water are recovered. A phenolphthalein solution is added as an indicator to the solution recovered, which is subjected to neutralization titration with a 0.01 N aqueous sodium hydroxide solution, for calculating ion exchange capacity.

<Determination method of proton conductivity>

A proton conducting polymer membrane (about 10 mm × 40 mm) stored in ion-exchange water is taken out, and water on the surface of the membrane is wiped off with filter paper. The membrane was mounted on a Teflon (registered trade mark) cell of a bielectrode non-enclosed system, and a platinum electrode was mounted on the surface (the same side) of the membrane such that the distance between electrodes is 30 mm. The resistance of the membrane at 23°C is measured by an alternating current impedance method (frequency: from 42 Hz to 5 MHz, applied voltage: 0.2 V) to calculate the proton conductivity.

<Determination method of methanol barrier properties>

Ion-exchanged water and an aqueous methanol solution of a specified concentration are separated with a proton conducting polymer membrane using a membrane permeation experimental apparatus available from Vidrex Company Limited in a 25°C environment. After a lapse of predetermined time, the solution that contains methanol permeated to the side of ion-exchanged water is collected, and the methanol content in the solution is quantified by a gas chromatograph. The permeation speed of methanol is determined from the result of the quantification, which is used for calculating the methanol permeation coefficient and the methanol barrier coefficient. The methanol permeation coefficient and the methanol barrier coefficient are calculated according to mathematical expressions 1 and 2 below.

[Mathematical expression 1]

$$\text{Methanol permeation coefficient } (\mu\text{mol}/(\text{cm}\cdot\text{day})) = \text{amount of methanol permeated } (\mu\text{mol}) \times \text{film thickness (cm)} /(\text{area of membrane } (\text{cm}^2) \times \text{permeation time (day)})$$

[Mathematical expression 2]

$$\text{Methanol barrier coefficient } ((\text{cm}\cdot\text{day})/\mu\text{mol}) = 1 / (\text{methanol permeation coefficient } (\mu\text{mol}/(\text{cm}\cdot\text{day}))$$

<Determination method of mechanical properties (breaking strength and elongation at break)>

Breaking strength and elongation at break of a proton conducting polymer membrane are determined according to a method of JIS K 7127. Five samples (n=5) of a proton conducting polymer membrane (width: about 10 mm) are used to determine mechanical properties at conditions of a distance between chucks of 30 mm and a rate of pulling of 20 mm/min. As for elongation at break, the average value and the maximum value are recorded.

<Dimensional stability>

Points of measurement with a space of about 20 mm are marked at the central part of a proton conducting polymer membrane (about 40 mm × 10 mm). The membrane is immersed in ion-exchanged water or in an aqueous methanol solution of 64% by weight for two hours in a 25°C environment. Subsequently, the distance between the points of measurement is measured to calculate a percent dimensional change.

<Determination method of X-ray diffraction>

X-ray diffraction of a proton conducting polymer membrane is determined using an X-ray diffraction apparatus available from Shimadzu Corporation at conditions of the X-ray to be used of Cu·Kα ray, an X-ray intensity of 30 kV and 100 A, an angle region of 2θ=5-50° and a scanning speed of 2°/min.

<Crystallinity>

The presence or absence of crystallinity is determined according to the standard described below, from the X-ray diffraction patterns obtained by the above described X-ray diffraction determination:

Yes: A sharp peak can be recognized by the X-ray diffraction determination.
No: A sharp peak cannot be recognized by the X-ray diffraction determination.

(Example 1)

Polyphenylene sulfide was used as a hydrocarbon polymer.
To a glass vessel, 729 g of 1-chlorobutane and 3.65 g of chlorosulfonic acid were weighed to prepare a chlorosulfonic acid solution. A polyphenylene sulfide film (trade name: Torelina, thickness: 50 μm, available from Toray Industries, Inc.) was weighed in an amount of 1.69 g, immersed in the chlorosulfonic acid solution and left standing at room temperature for 20 hours (chlorosulfonic acid was added in an amount of 2 equivalents relative to the aromatic unit of the polyphenylene sulfide). After left standing at room temperature for 20 hours, the polyphenylene sulfide film was recovered and washed with ion-exchanged water until it is neutralized.
A polyphenylene sulfide film after washing was left standing under a controlled relative humidity of 98%, 80%,

60% or 50% for 30 minutes in a thermo-hygrostat at 23°C to dry the film, obtaining a polyphenylene sulfide membrane in which a sulfonic acid group is introduced (hereinafter referred to as a sulfonated polyphenylene sulfide membrane) (80 mm × 80 mm, thickness: 51 µm), as a proton conducting polymer membrane.

Various properties of these proton conducting polymer membranes were determined according to the methods as described above.

The results of the evaluation of the properties of this membrane are shown in Tables 1 to 5 and in Figure 4.

(Example 2)

This example was performed in the same manner as in Example 1 except that 721 g of 1-chlorobutane, 5. 40 g of chlorosulfonic acid and 1.67 g of the polyphenylene sulfide film were used (chlorosulfonic acid was added in an amount of 3 equivalents relative to the aromatic unit of the polyphenylene sulfide). It was observed that the resulting sulfonated polyphenylene sulfide membrane (80 mm × 80 mm, thickness: 53 µm) maintained the shape of a membrane.

The results of the evaluation of the properties of this membrane are shown in Tables 1 to 3 and in Figure 5.

(Example 3)

This example was performed in the same manner as in Example 1 except that 716 g of 1-chlorobutane, 7.16 g of chlorosulfonic acid and 1.66 g of the polyphenylene sulfide film were used (chlorosulfonic acid was added in an amount of 4 equivalents relative to the aromatic unit of the polyphenylene sulfide). It was observed that the resulting sulfonated polyphenylene sulfide membrane (80 mm × 80 mm, thickness: 54 µm) maintained the shape of a membrane.

The results of the evaluation of the properties of this membrane are shown in Tables 1, 2 and 5 and in Figure 6.

(Example 4)

This example was performed in the same manner as in Example 1 except that 734 g of 1-chlorobutane, 11. 00 g of chlorosulfonic acid and 1.70 g of the polyphenylene sulfide film were used (chlorosulfonic acid was added in an amount of 6 equivalents relative to the aromatic unit of the polyphenylene sulfide). It was observed that the resulting sulfonated polyphenylene sulfide membrane (80 mm × 80 mm, thickness: 78 µm) maintained the shape of a membrane.

The results of the evaluation of the properties of this membrane are shown in Tables 1 to 3.

(Example 5)

This example was performed in the same manner as in Example 1 except that 74 6 g of 1-chlorobutane, 14.93 g of chlorosulfonic acid and 1.73 g of the polyphenylene sulfide film were used (chlorosulfonic acid was added in an amount of 8 equivalents relative to the aromatic unit of the polyphenylene sulfide). It was observed that the resulting sulfonated polyphenylene sulfide membrane (80 mm × 80 mm, thickness: 93 µm) maintained the shape of a membrane.

The results of the evaluation of the properties of this membrane are shown in Tables 1 to 3.

(Example 6)

This example was performed in the same manner as in Example 1 except that 712 g of 1-chlorobutane, 17.80 g of chlorosulfonic acid and 1.65 g of the polyphenylene sulfide film were used (chlorosulfonic acid was added in an amount of 10 equivalents relative to the aromatic unit of the polyphenylene sulfide). It was observed that the resulting sulfonated polyphenylene sulfide membrane (80 mm × 80 mm, thickness: 100 µm) maintained the shape of a membrane.

The results of the evaluation of the properties of this membrane are shown in Tables 1 to 3.

(Example 7)

This example was performed in the same manner as in Example 1 except that 583 g of 1-chlorobutane, 5.83 g of chlorosulfonic acid and 1.35 g of a polyphenylene sulfide film (trade name: Torelina, thickness: 25 µm, available from Toray Industries, Inc.) were used (chlorosulfonic acid was added in an amount of 4 equivalents relative to the aromatic unit of the polyphenylene sulfide). It was observed that the resulting sulfonated polyphenylene sulfide membrane (80 mm × 80 mm, thickness: 32 µm) maintained the shape of a membrane.

The results of the evaluation of the properties of this membrane are shown in Tables 1 and 2.

(Example 8)

This example was performed in the same manner as in Example 7 except that 595 g of 1-chlorobutane, 7.44 g of chlorosulfonic acid and 1.38 g of the polyphenylene sulfide film were used (chlorosulfonic acid was added in an amount of 5 equivalents relative to the aromatic unit of the polyphenylene sulfide) . It was observed that the resulting sulfonated polyphenylene sulfide membrane (80 mm × 80 mm, thickness: 35 μm) maintained the shape of a membrane.
The results of the evaluation of the properties of this membrane are shown in Tables 1 and 2.

(Example 9)

This example was performed in the same manner as in Example 7 except that 578 g of 1-chlorobutane, 8. 67 g of chlorosulfonic acid and 1.34 g of the polyphenylene sulfide film were used (chlorosulfonic acid was added in an amount of 6 equivalents relative to the aromatic unit of the polyphenylene sulfide). It was observed that the resulting sulfonated polyphenylene sulfide membrane (80 mm × 80 mm, thickness: 40 μm) maintained the shape of a membrane.
The results of the evaluation of the properties of this membrane are shown in Tables 1 to 3.

(Example 10)

This example was performed in the same manner as in Example 7 except that 587 g of 1-chlorobutane, 11. 74 g of chlorosulfonic acid and 1.36 g of the polyphenylene sulfide film were used (chlorosulfonic acid was added in an amount of 8 equivalents relative to the aromatic unit of the polyphenylene sulfide). It was observed that the resulting sulfonated polyphenylene sulfide membrane (80 mm × 80 mm, thickness: 42 μm) maintained the shape of a membrane.
The results of the evaluation of the properties of this membrane are shown in Tables 1 to 3.

(Example 11)

A sulfonated polyphenylene sulfide membrane obtained according to Example 4 was irradiated with an electron beam of an acceleration voltage of 4.6 MeV, an irradiation dose of 500 kGy and an electric current of 20 mA. It was observed that the resulting sulfonated polyphenylene sulfide membrane (80 mm × 80 mm, thickness: 83 μm) maintained the shape of a membrane.
The results of the evaluation of the properties of this membrane are shown in Tables 1 and 2.

(Example 12)

This example was performed in the same manner as in Example 11 except that the sulfonated polyphenylene sulfide membrane obtained according to Example 5 was used in place of the sulfonated polyphenylene sulfide membrane obtained in Example 4. It was observed that the resulting sulfonated polyphenylene sulfide membrane (80 mm × 80 mm, thickness: 93 μm) maintained the shape of a membrane.
The results of the evaluation of the properties of this membrane are shown in Tables 1 to 3.

(Example 13)

This example was performed in the same manner as in Example 11 except that the sulfonated polyphenylene sulfide membrane obtained according to Example 6 was used in place of the sulfonated polyphenylene sulfide membrane obtained in Example 4. It was observed that the resulting sulfonated polyphenylene sulfide membrane (80 mm × 80 mm, thickness: 104 μm) maintained the shape of a membrane.
The results of the evaluation of the properties of this membrane are shown in Tables 1 and 2.

(Example 14)

This example was performed in the same manner as in Example 11 except that the sulfonated polyphenylene sulfide membrane obtained according to Example 8 was used in place of the sulfonated polyphenylene sulfide membrane obtained in Example 4. It was observed that the resulting sulfonated polyphenylene sulfide membrane (80 mm × 80 mm, thickness: 36 μm) maintained the shape of a membrane.
The results of the evaluation of the properties of this membrane are shown in Tables 1 to 3.

(Example 15)

This example was performed in the same manner as in Example 11 except that the sulfonated polyphenylene sulfide membrane obtained according to Example 9 was used in place of the sulfonated polyphenylene sulfide membrane obtained in Example 4. It was observed that the resulting sulfonated polyphenylene sulfide membrane (80 mm × 80 mm, thickness: 41 μm) maintained the shape of a membrane.
The results of the evaluation of the properties of this membrane are shown in Tables 1 to 3.

(Example 16)

This example was performed in the same manner as in Example 11 except that the sulfonated polyphenylene sulfide membrane obtained according to Example 10 was used in place of the sulfonated polyphenylene sulfide membrane obtained in Example 4. It was observed that the resulting sulfonated polyphenylene sulfide membrane (80 mm × 80 mm, thickness: 48 μm) maintained the shape of a membrane.
The results of the evaluation of the properties of this membrane are shown in Tables 1 to 3.

(Example 17)

To a glass container of 500 mL, 1.0 g of a polyphenylene sulfide film (tradename: Torelina, thickness: 50μm, available from Toray Industries, Inc.) was weighed, and 1.5 g of a sulfur trioxide solution was added dropwise from a dropping funnel. They were warmed up to 60°C with a water bath to evaporate sulfur trioxide to bring it into contact with the polyphenylene sulfide film. They were left standing in this state for 30 minutes, and the polyphenylene sulfide film was washed with ion-exchanged water until it is neutralized.
A polyphenylene sulfide film after washing was left standing under a controlled relative humidity of 98%, 80%, 60% or 50% for 30 minutes in a thermo-hygrostat at 23°C to dry the film, obtaining a polyphenylene sulfide membrane in which a sulfonic acid group is introduced (hereinafter referred to as a sulfonated polyphenylene sulfide membrane) (50 mm × 50 mm, thickness: 70 μm), as a proton conducting polymer membrane.
The results of the evaluation of the properties of this membrane are shown in Tables 1, 2 and 5 and in Figure 7.

(Comparative Example 1)

A Nafion 115 film available from EI du Pont de Nemours and Company was used as a sulfonic acid group-containing membrane comprising a non-hydrocarbon polymer.
The results of the evaluation of the properties of this membrane are shown in Tables 1, 2 and 4.

(Comparative Example 2)

In a separable flask of 500 mL, 15 g of 1, 4-polyphenylene sulfide (number average molecular weight: 10,000, available from Aldrich Corporation) was dissolved in 300 mL of chlorosulfonic acid. The mixture was cooled with ice and stirred at a reaction temperature of 5°C for 60 minutes. Then, to the reaction mixture maintained at 20°C, 100 mL of oleum (15% $SO_3$) was added dropwise, and the resulting mixture was stirred for 300 minutes to react 1,4-polyphenylene sulfide with oleum. The resulting reaction solution was added to a mixture of 2 kg of ice and 600 mL of sulfuric acid (30% by weight) with stirring. A precipitate was washed in boiling ion-exchanged water until the washing water is neutral, by exchanging ion-exchanged water (exchanging ion-exchanged water 10 times, total washing time of 80 hours). The precipitate was recovered by filtration followed by drying at 80°C for 3 hours to obtain a sulfonated polyphenylene sulfide.
A 20% by weight solution of the obtained sulfonated polyphenylene sulfide in N-methyl-2-pyrolidone was prepared, cast on a glass dish and dried under reduced pressure at 150°C. However, a self-supporting shape of a membrane was not obtained, and it was unable to perform the evaluation of the properties other than ion exchange capacity.
The result of the evaluation of the properties of this membrane is shown in Tables 1.

(Comparative Example 3)

In a mayonnaise bottle of 900 mL, 945 g of dichloromethane and 4.72 g of chlorosulfonic acid were weighed to prepare a chlorosulfonic acid solution. Then, 2.21 g of a polyphenylene sulfide film (trade name: Torelina, thickness: 50 μm, available from Toray Industries, Inc.) was weighed and immersed in the chlorosulfonic acid solution to be brought into contact with the solution. In this state, they were left standing at room temperature for 20 hours (chlorosulfonic

acid was added in an amount of 2 equivalents relative to the aromatic unit of the polyphenylene sulfide). After left standing at room temperature for 20 hours, the polyphenylene sulfide film was recovered and washed with ion-exchanged water until it is neutralized.

A polyphenylene sulfide film after washing was left standing under a controlled relative humidity of 98%, 80%, 60% or 50% for 30 minutes in a thermo-hygrostat at 23°C to dry the film, obtaining a polyphenylene sulfide membrane in which a sulfonic acid group is introduced (hereinafter referred to as a sulfonated polyphenylene sulfide membrane) (50 mm × 50 mm, thickness: 110 μm), as a proton conducting polymer membrane.

The results of the evaluations of the properties of this membrane are shown in Tables 1 to 5 and in Figure 8.

(Comparative Example 4)

To 100 parts by weight of a polyphenylene sulfide (trade name: DIC-PPS FZ-2200-A5, available from Dainippon Ink and Chemicals, Incorporated), 2 parts by weight of tricresyl phosphate (trade name: TCP, available from Daihachi Chemical Industry Co., Ltd.) was added as a plasticizer. They were melted and mixed in a twin-screw extruder heated at 280°C to obtain a pellet composed of a predetermined mixture. The pellet was melt-extruded in an extruder having a screw temperature of 290°C and a T-die temperature of 320°C to obtain a film with a thickness of 50 μm.

To a mayonnaise bottle of 900 mL, 945 g of dichloromethane and 4.72 g of chlorosulfonic acid were weighed to prepare a chlorosulfonic acid solution. Then, 2.21 g of a film composed of the polyphenylene sulfide obtained in the above described method was weighed and immersed in the chlorosulfonic acid solution to be brought into contact with the solution. In this state, they were left standing at room temperature for 20 hours (chlorosulfonic acid was added in an amount of 2 equivalents relative to the aromatic unit of the polyphenylene sulfide). After left standing at roomtemperature for 20 hours, the polyphenylene sulfide film was recovered and washed with ion-exchanged water until it is neutralized.

A polyphenylene sulfide film after washing was left standing under a controlled relative humidity of 98%, 80%, 60% or 50% for 30 minutes in a thermo-hygrostat at 23°C to dry the film, obtaining a polyphenylene sulfide membrane in which a sulfonic acid group is introduced (hereinafter referred to as a sulfonated polyphenylene sulfide membrane) (80 mm × 80 mm, thickness: 60 μm), as a proton conducting polymer membrane.

The results of the evaluations of the properties of this membrane are shown in Tables 1 to 5 and in Figure 9.

Table 1

| Ion exchange capacity and proton conductivity of proton conducting polymer membranes | | |
|---|---|---|
| | Ion exchange capacity (milli-equivalent/g) | Proton conductivity (S/cm) |
| Example 1 | 0.5 | $2.8\times10^{-2}$ |
| Example 2 | 1.0 | $2.4\times10^{-2}$ |
| Example 3 | 1.1 | $3.7\times10^{-2}$ |
| Example 4 | 1.3 | $4.5\times10^{-2}$ |
| Example 5 | 1.5 | $3.6\times10^{-2}$ |
| Example 6 | 1.8 | $7.0\times10^{-2}$ |
| Example 7 | 1.2 | $1.7\times10^{-2}$ |
| Example 8 | 1.2 | $2.8\times10^{-2}$ |
| Example 9 | 1.5 | $4.8\times10^{-2}$ |
| Example 10 | 1.6 | $5.3\times10^{-2}$ |
| Example 11 | 1.4 | $2.7\times10^{-2}$ |
| Example 12 | 1.8 | $5.0\times10^{-2}$ |
| Example 13 | 2.1 | $7.2\times10^{-2}$ |
| Example 14 | 1.7 | $3.7\times10^{-2}$ |
| Example 15 | 1.8 | $4.9\times10^{-2}$ |
| Example 16 | 2.0 | $6.2\times10^{-2}$ |
| Example 17 | 0.9 | $2.5\times10^{-2}$ |

Table 1 (continued)

| Ion exchange capacity and proton conductivity of proton conducting polymer membranes | | |
|---|---|---|
| | Ion exchange capacity (milli-equivalent/g) | Proton conductivity (S/cm) |
| Comparative Example 1 | 0.9 | $5.8\times10^{-2}$ |
| Comparative Example 2 | 1.6 | - |
| Comparative Example 3 | 1.5 | $7.7\times10^{-2}$ |
| Comparative Example 4 | 1.5 | $6.5\times10^{-2}$ |

Table 2 Methanol barrier coefficient, and the product of proton conductivity and methanol barrier coefficient, of proton conductive polymer membranes

| | Methanol barrier coefficient ((cm·day)/μmol) | | | | | Product of proton conductivity and methanol barrier coefficient ((S·day)/μmol) | | | | |
|---|---|---|---|---|---|---|---|---|---|---|
| | 3.2wt% | 10wt% | 13.3wt% | 27.5wt% | 64wt% | 3.2wt% | 10wt% | 13.3wt% | 27.5wt% | 64wt% |
| Example 1 | - | $>10^{-1}$ | - | - | $>10^{-1}$ | - | $>2.8\times10^{-3}$ | - | - | $>2.8\times10^{-3}$ |
| Example 2 | - | - | - | - | $>10^{-1}$ | - | - | - | - | $>2.4\times10^{-3}$ |
| Example 3 | - | - | - | - | $1.6\times10^{-2}$ | - | - | - | - | $5.9\times10^{-4}$ |
| Example 4 | $1.3\times10^{-1}$ | $2.6\times10^{-2}$ | $2.5\times10^{-2}$ | $1.1\times10^{-2}$ | $5.4\times10^{-3}$ | $5.9\times10^{-3}$ | $1.2\times10^{-3}$ | $1.1\times10^{-3}$ | $5.0\times10^{-4}$ | $2.4\times10^{-4}$ |
| Example 5 | $3.2\times10^{-2}$ | $8.9\times10^{-3}$ | $7.3\times10^{-3}$ | $3.6\times10^{-3}$ | $8.4\times10^{-4}$ | $1.2\times10^{-3}$ | $3.2\times10^{-4}$ | $2.6\times10^{-4}$ | $1.3\times10^{-4}$ | $3.0\times10^{-5}$ |
| Example 6 | - | $5.2\times10^{-3}$ | - | - | $8.9\times10^{-4}$ | - | $3.6\times10^{-4}$ | - | - | $6.2\times10^{-5}$ |
| Example 7 | - | - | - | - | $2.3\times10^{-2}$ | - | - | - | - | $3.9\times10^{-4}$ |
| Example 8 | - | $3.4\times10^{-2}$ | - | - | $7.4\times10^{-3}$ | - | $9.5\times10^{-4}$ | - | - | $2.1\times10^{-4}$ |
| Example 9 | $2.5\times10^{-2}$ | $7.6\times10^{-3}$ | $5.7\times10^{-3}$ | $3.6\times10^{-3}$ | $1.1\times10^{-3}$ | $1.2\times10^{-3}$ | $3.6\times10^{-4}$ | $2.7\times10^{-4}$ | $1.7\times10^{-4}$ | $5.3\times10^{-5}$ |
| Example 10 | - | - | - | - | $8.6\times10^{-4}$ | - | - | - | - | $4.6\times10^{-5}$ |
| Example 11 | $7.1\times10^{-2}$ | $3.0\times10^{-2}$ | $2.0\times10^{-2}$ | $1.2\times10^{-2}$ | $2.9\times10^{-3}$ | $1.9\times10^{-3}$ | $8.1\times10^{-4}$ | $5.4\times10^{-4}$ | $3.2\times10^{-4}$ | $7.8\times10^{-5}$ |
| Example 12 | $1.9\times10^{-2}$ | $7.4\times10^{-3}$ | $5.3\times10^{-3}$ | $3.3\times10^{-3}$ | $1.1\times10^{-3}$ | $9.5\times10^{-4}$ | $3.7\times10^{-4}$ | $2.7\times10^{-4}$ | $1.7\times10^{-4}$ | $5.5\times10^{-5}$ |
| Example 13 | $1.2\times10^{-2}$ | $3.9\times10^{-3}$ | $3.6\times10^{-3}$ | $1.4\times10^{-3}$ | $6.6\times10^{-4}$ | $8.6\times10^{-4}$ | $2.8\times10^{-4}$ | $2.6\times10^{-4}$ | $1.0\times10^{-4}$ | $4.8\times10^{-5}$ |
| Example 14 | $4.3\times10^{-2}$ | $2.2\times10^{-2}$ | $1.4\times10^{-2}$ | $8.0\times10^{-3}$ | $3.0\times10^{-3}$ | $1.6\times10^{-3}$ | $8.1\times10^{-4}$ | $5.2\times10^{-4}$ | $3.0\times10^{-4}$ | $1.1\times10^{-4}$ |
| Example 15 | $3.2\times10^{-2}$ | $1.4\times10^{-2}$ | $1.0\times10^{-2}$ | $4.8\times10^{-3}$ | $1.8\times10^{-3}$ | $1.6\times10^{-3}$ | $6.9\times10^{-4}$ | $4.9\times10^{-4}$ | $2.4\times10^{-4}$ | $8.8\times10^{-5}$ |
| Example 16 | $1.7\times10^{-2}$ | $6.7\times10^{-3}$ | $3.9\times10^{-3}$ | $2.3\times10^{-3}$ | $8.2\times10^{-4}$ | $1.1\times10^{-3}$ | $4.2\times10^{-4}$ | $2.4\times10^{-4}$ | $1.4\times10^{-4}$ | $5.1\times10^{-5}$ |
| Comparative Example 1 | $9.2\times10^{-3}$ | $2.3\times10^{-3}$ | $1.4\times10^{-3}$ | $7.4\times10^{-4}$ | $2.4\times10^{-4}$ | $5.3\times10^{-4}$ | $1.3\times10^{-4}$ | $8.7\times10^{-5}$ | $4.3\times10^{-5}$ | $1.4\times10^{-5}$ |
| Comparative Example 3 | - | $2.6\times10^{-3}$ | - | - | $3.8\times10^{-4}$ | - | $2.0\times10^{-4}$ | - | - | $2.9\times10^{-5}$ |
| Comparative Example 4 | - | $3.7\times10^{-3}$ | - | - | $5.2\times10^{-4}$ | - | $2.4\times10^{-4}$ | - | - | $4.1\times10^{-5}$ |

Table 3

| Mechanical properties of proton conducting polymer membranes | | | |
|---|---|---|---|
| | Breaking strength (MPa) | Elongation at break (average) (%) | Elongation at break (maximum) (%) |
| Example 1 | 145 | 40 | 52 |
| Example 2 | 83 | 20 | 24 |
| Example 4 | 62 | 16 | 23 |
| Example 5 | 59 | 12 | 16 |
| Example 6 | 60 | 17 | 25 |
| Example 9 | 57 | 20 | 41 |
| Example 10 | 55 | 18 | 29 |
| Example 12 | 63 | 12 | 17 |
| Example 14 | 59 | 25 | 52 |
| Example 15 | 57 | 17 | 30 |
| Example 16 | 55 | 15 | 22 |
| Comparative Example 3 | 51 | 9 | 12 |
| Comparative Example 4 | 38 | 11 | 20 |

Table 4

| Percent dimensional change of proton conducting polymer membranes | | |
|---|---|---|
| | Percent dimensional change (%) | |
| | Ion-exchanged water | Methanol of 64% by weight |
| Example 1 | 0 | 0.4 |
| Comparative Example 1 | 12 | 44 |
| Comparative Example 3 | 10 | 20 |
| Comparative Example 4 | 9 | 22 |

Table 5

| Crystallinity of proton conducting polymer membrane | |
|---|---|
| | Crystallinity |
| Example 1 | exist |
| Example 2 | exist |
| Example 3 | exist |
| Example 17 | exist |
| Comparative Example 3 | virtually not exist |
| Comparative Example 4 | virtually not exist |

When Examples 1 to 17 are compared with Comparative Examples 1, 3 and 4, in Tables 1 to 5, it is apparent that proton conducting polymer membranes of the present invention have proton conductivity of the same order as that of conventional proton conducting polymer membranes and are useful as the electrolytes in polymer electrolyte fuel cells and direct methanol fuel cells. In addition, it is apparent that proton conducting polymer membranes of the

present invention have better methanol barrier coefficients than conventional proton conducting polymer membranes and are useful as the electrolytes in direct methanol fuel cells. Furthermore, it is shown that proton conducting polymer membranes of the present invention each have a larger product of proton conductivity and a methanol barrier coefficient as compared with conventional proton conducting polymer membranes and have characteristics that proton conductivity and methanol barrier properties are compatible. Accordingly, it is apparent that proton conducting polymer membranes of the present invention are useful as the electrodes in direct methanol fuel cells.

When Examples 1, 2, 4 to 6, 9, 10, 12, and 14 to 16 are compared with Comparative Examples 3 and 4, in Table 3, it is apparent that proton conducting polymer membranes of the present invention have better breaking strength and elongation at break than conventional proton conducting polymer membranes and are useful as the electrolytes in polymer electrolyte fuel cells and direct methanol fuel cells.

When Example 1 is compared with Comparative Examples 1, 3 and 4, in Table 4, it is shown that a proton conducting polymer membrane of the present invention has higher dimensional stability to ion-exchanged water and an aqueous methanol solution of 64% by weight and better handling properties than conventional proton conducting polymer membranes. Accordingly, it is apparent that a proton conducting polymer membrane of the present invention is useful as the electrode in polymer electrolyte fuel cells and direct methanol fuel cells.

From the results of the evaluations of X-ray diffraction in Figures 4 to 9 and crystallinity in Table 5, it is apparent that proton conducting polymer membranes of the present invention in Examples 1 to 3 and 17 each have a crystalline peak, showing that a crystalline phase remains. On the other hand, from the results of the determination of X-ray diffraction in Figures 8 and 9, it is apparent that no crystalline peak is observed in conventional proton conducting polymer membranes in Comparative Examples 3 and 4, showing that almost no crystalline phase remains.

Moreover, although a conventional proton conducting polymer membrane in Comparative Example 2 cannot provide a self-supporting membrane shape as well as it takes as long as 90 hours to manufacture the same, a proton conducting polymer membrane of the present invention in Example 1 can be manufactured in about 24 hours, showing that the present invention is also excellent in terms of productivity. That is to say, the manufacturing method of the present invention can provide a proton conducting polymer membrane having practical handling properties in a simpler method.

Industrial Applicability

According to the present invention, it has become possible that excellent proton conductivity and high methanol barrier properties can be exhibited by a proton conducting polymer membrane having a product of proton conductivity and a methanol barrier coefficient of a specific value or more, or a proton conducting polymer membrane having an ion exchange capacity of 0.3 milli-equivalent/g or more, and having a crystalline phase.

These proton conducting polymer membranes have excellent proton conductivity, high methanol barrier properties, excellent mechanical properties and the like, and are useful as the electrodes in polymer electrode fuel cells and direct methanol fuel cells.

## Claims

**1.** A proton conducting polymer membrane having a product ((S·day)/μmol) of a proton conductivity (S/cm) at 23°C and a methanol barrier coefficient ((cm·day)/μmol) at 25°C in an aqueous methanol solution of a specified concentration that satisfies at least one of either (A) or (B) below, wherein

(A) the product in an aqueous methanol solution of 10% by weight is $2.5\times10^{-4}$ (S·day)/μmol or more, or
(B) the product in an aqueous methanol solution of 64% by weight is $4.5\times10^{-5}$ (S·day)/μmol or more.

**2.** A proton conducting polymer membrane having an ion exchange capacity of 0.3 milli-equivalent/g or more, and having a crystalline phase.

**3.** The proton conducting polymer membrane according to claim 1 or 2, wherein the proton conducting polymer membrane comprises sulfonic acid groups.

**4.** The proton conducting polymer membrane according to any one of claims 1 to 3, wherein the proton conducting polymer membrane comprises a hydrocarbon polymer.

**5.** The proton conducting polymer membrane according to claim 4, wherein the hydrocarbon polymer comprises a crystalline aromatic polymer.

6. The proton conducting polymer membrane according to claim 5, wherein the crystalline aromatic polymer is polyphenylene sulfide.

7. The proton conducting polymer membrane according to any one of claims 1 to 6, wherein the proton conducting polymer membrane has an elongation at break of 10% or more as determined according to JIS K 7127.

8. The proton conducting polymer membrane according to any one of claims 1 to 7, wherein the proton conducting polymer membrane has a proton conductivity of $1.0\times10^{-3}$ S/cm or more at 23°C.

9. The proton conducting polymer membrane according to claim 8, wherein the proton conducting polymer membrane has a proton conductivity of $1.0\times10^{-2}$ S/cm or more at 23°C.

10. The proton conducting polymer membrane according to any one of claims 1 to 9, wherein the proton conducting polymer membrane has a methanol barrier coefficient of $3.0\times10^{-4}$ (cm·day)/μmol or more at 25°C in an aqueous methanol solution of 64% by weight.

11. The proton conducting polymer membrane according to any one of claims 1 to 10, wherein the proton conducting polymer membrane is irradiated with at least one radiation selected from the group consisting of γ-ray, electron beam and ion beam.

12. The proton conducting polymer membrane according to claim 11, wherein the dose of the radiation is from 10 kGy to 1, 000 kGy.

13. A membrane-electrode assembly using the proton conducting polymer membrane according to any one of claims 1 to 12.

14. The membrane-electrode assembly according to claim 13,
wherein at least one catalyst layer of the membrane-electrode assembly comprises a platinum and ruthenium catalyst.

15. A polymer electrolyte fuel cell using the proton conducting polymer membrane according to any one of claims 1 to 12, or the membrane-electrode assembly according to claim 13 or 14.

16. A direct methanol fuel cell using the proton conducting polymer membrane according to any one of claims 1 to 12, or the membrane-electrode assembly according to claim 13 or 14.

17. A method for manufacturing a proton conducting polymer membrane having a product ((S·day)/μmol) of a proton conductivity (S/cm) at 23°C and a methanol barrier coefficient ((cm·day)/μmol) at 25°C in an aqueous methanol solution of a specified concentration that satisfies at least one of either (A) or (B) below, wherein

(A) the product in an aqueous methanol solution of 10% by weight is $2.5\times10^{-4}$ (S·day)/μmol or more, or
(B) the product in an aqueous methanol solution of 64% by weight is $4.5\times10^{-5}$ (S·day)/μmol or more,
the method comprising bringing a film comprising a hydrocarbon polymer into contact with a sulfonating agent.

18. A method for manufacturing a proton conducting polymer membrane having an ion exchange capacity of 0.3 milli-equivalent/g or more, and having a crystalline phase, the method comprising bringing a film comprising a crystalline hydrocarbon polymer into contact with a sulfonating agent.

19. The method for manufacturing a proton conducting polymer membrane according to claim 17, wherein the hydrocarbon polymer is a crystalline hydrocarbon polymer.

20. The method for manufacturing a proton conducting polymer membrane according to any one of claims 17 to 19, wherein the hydrocarbon polymer is polyphenylene sulfide.

21. The method for manufacturing a proton conducting polymer membrane according to any one of claims 17 to 20, wherein the sulfonating agent is at least one selected from the group consisting of chlorosulfonic acid, oleum, sulfur trioxide and concentrated sulfuric acid.

**22.** The method for manufacturing a proton conducting polymer membrane according to any one of claims 17 to 21, wherein the film is brought into contact with the sulfonating agent in the presence of a solvent.

**23.** The method for manufacturing a proton conducting polymer membrane according to claim 22, wherein the solvent is a halide with three or more carbon atoms.

**24.** The method for manufacturing a proton conducting polymer membrane according to claim 22 or 23, wherein the solvent is at least one selected from the group consisting of 1-chloropropane, 1-bromopropane, 1-chlorobutane, 2-chlorobutane, 1-chloro-2-methylpropane, 1-bromobutane, 2-bromobutane, 1-bromo-2-methylpropane, 1-chloropentane, 1-bromopentane, 1-chlorohexane, 1-bromohexane, chlorocyclohexane and bromocyclohexane.

**25.** The method for manufacturing a proton conducting polymer membrane according to any one of claims 22 to 24, wherein the solvent is 1-chlorobutane.

**26.** The method for manufacturing a proton conducting polymer membrane according to any one of claims 17 to 21, wherein the sulfonating agent is sulfur trioxide, and the film comprising the hydrocarbon polymer is brought into contact with a gas containing sulfur trioxide.

**27.** The method for manufacturing a proton conducting polymer membrane according to any one of claims 17 to 26, wherein the proton conducting polymer membrane is irradiated with at least one radiation selected from the group consisting of $\gamma$-ray, electron beam and ion beam.

**28.** The method for manufacturing a proton conducting polymer membrane according to claim 27, wherein the dose of the radiation is from 10 kGy to 1,000 kGy.

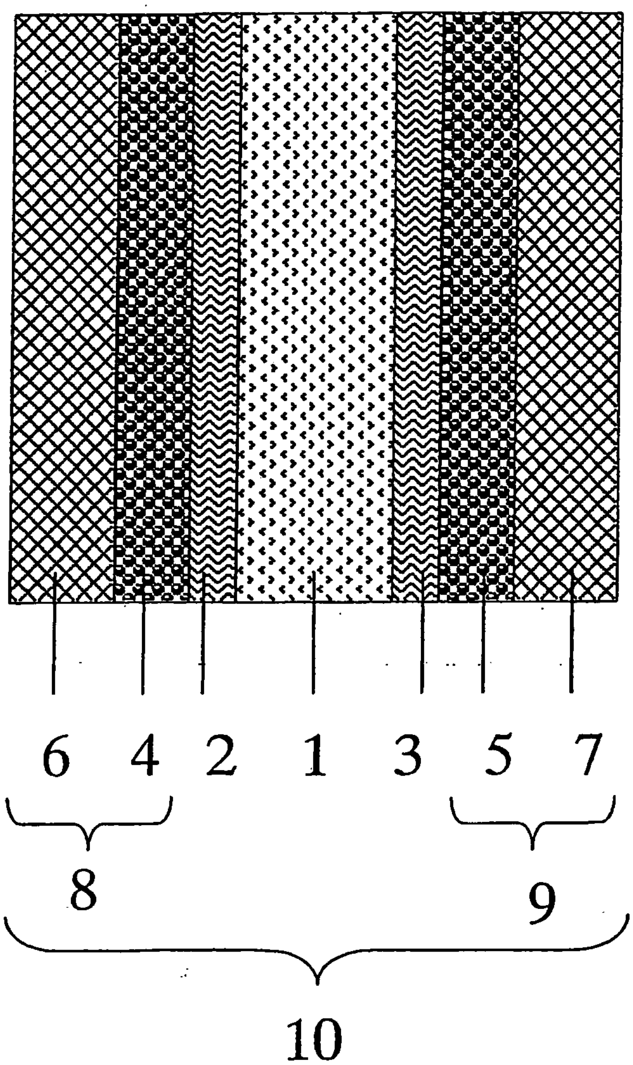


FIG. 1

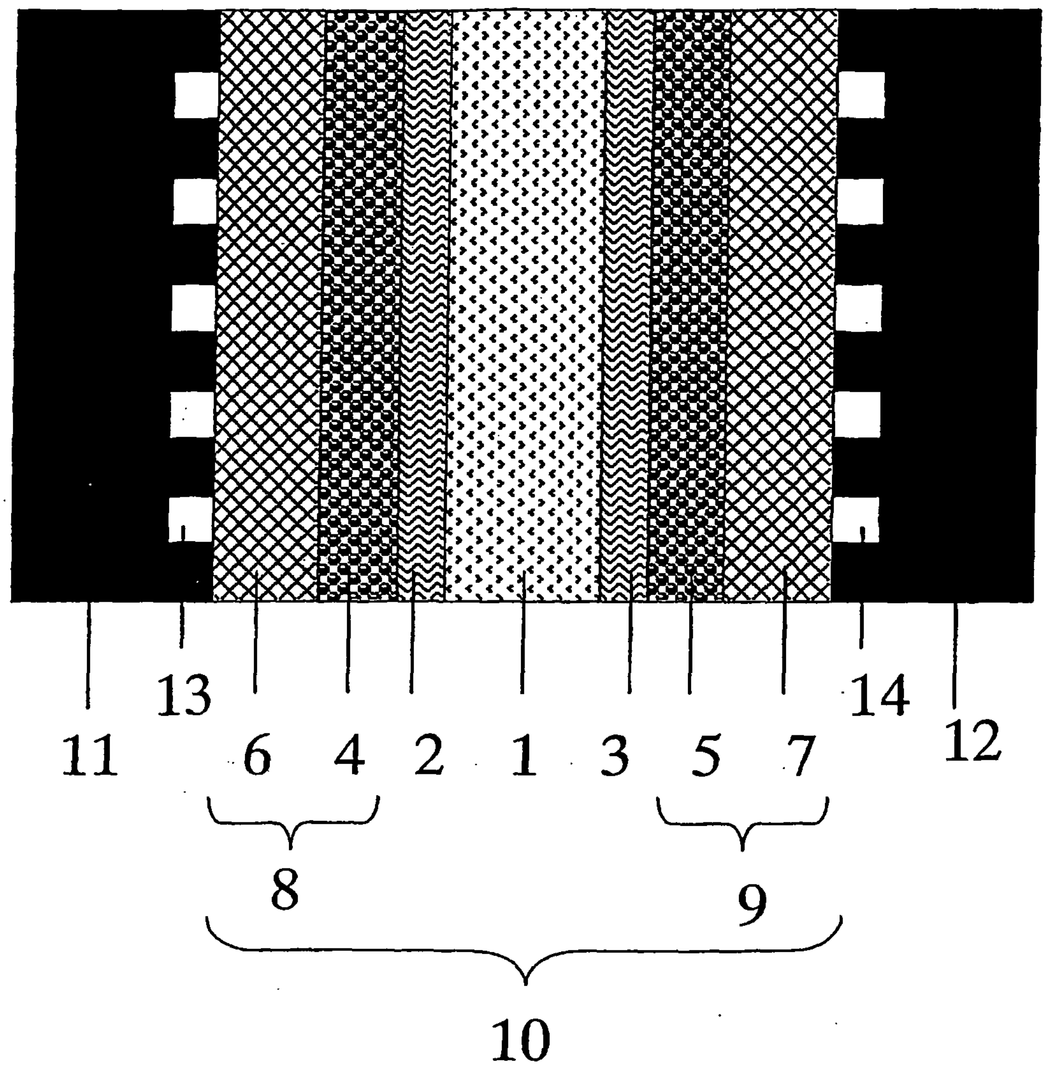


FIG. 2

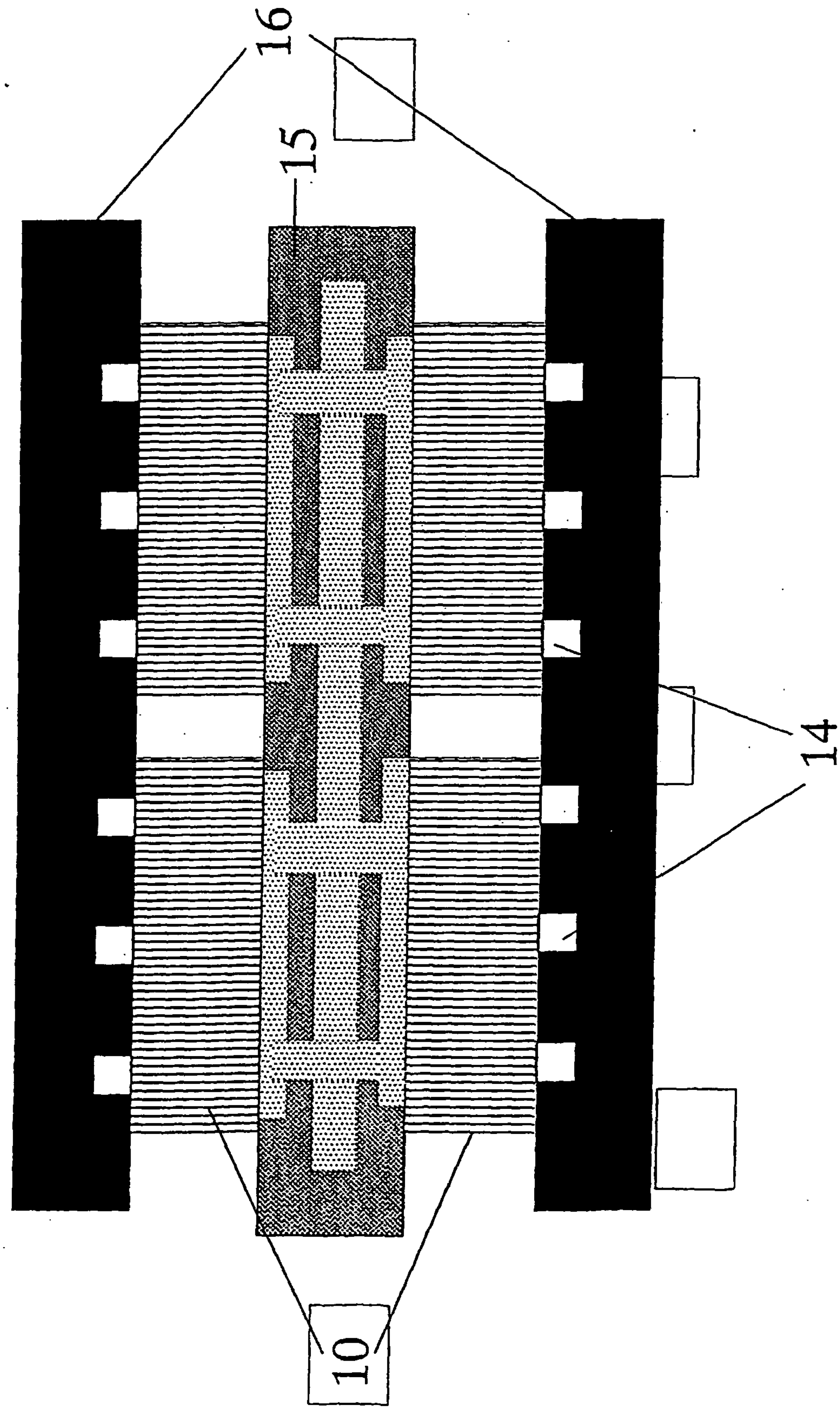


FIG. 3

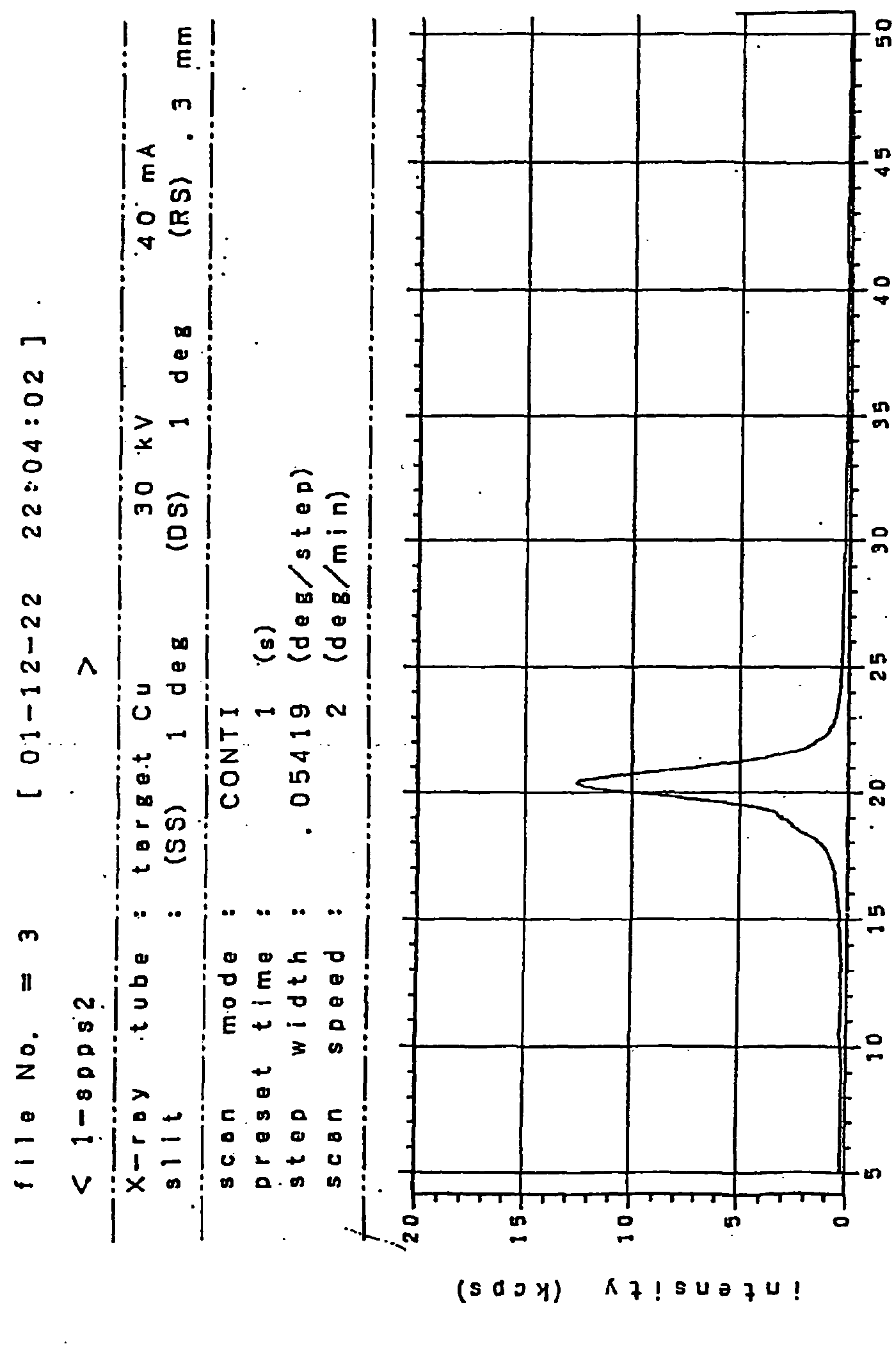

file No. = 3 [ 01-12-22 22:04:02 ]
< 1-spps2 >
X-ray tube : target Cu 30 kV 40 mA
slit : (SS) 1 deg (DS) 1 deg (RS) .3 mm
scan mode : CONTI
preset time : 1 (s)
step width : .05419 (deg/step)
scan speed : 2 (deg/min)
5 10 15 20 25 30 35 40 45 50
0 5 10 15 20
intensity (kcps)


FIG. 4

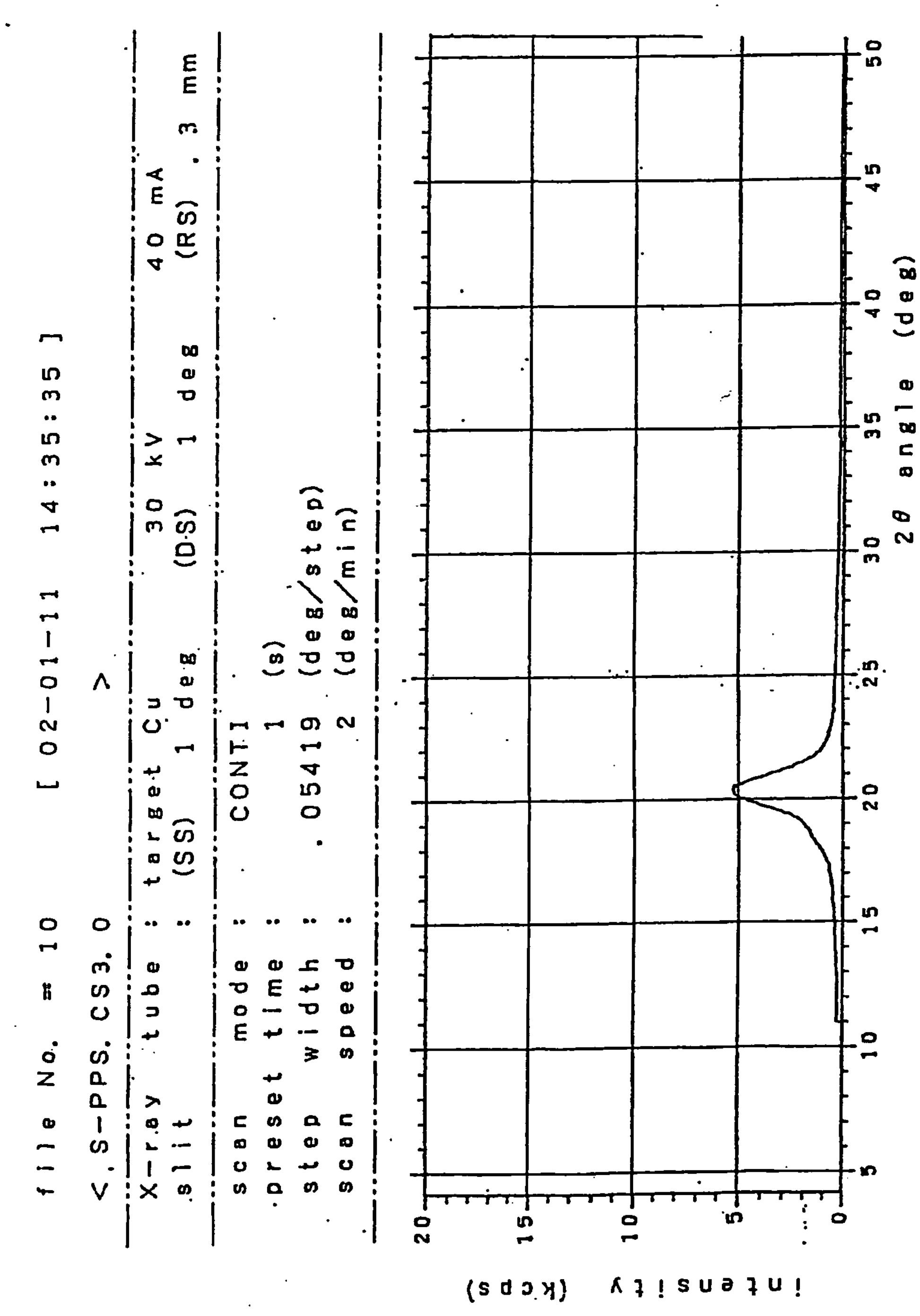
file No. = 10 [ 02-01-11 14:35:35 ]
<S-PPS. CS3. 0 >
X-ray tube : target Cu 30 kV 40 mA
slit : (SS) 1 deg (DS) 1 deg (RS) .3 mm
scan mode : CONTI
preset time : 1 (s)
step width : .05419 (deg/step)
scan speed : 2 (deg/min)
20
15
10
5
0
intensity (kcps)
5
10
15
20
25
30
35
40
45
50
2θ angle (deg)

FIG. 5

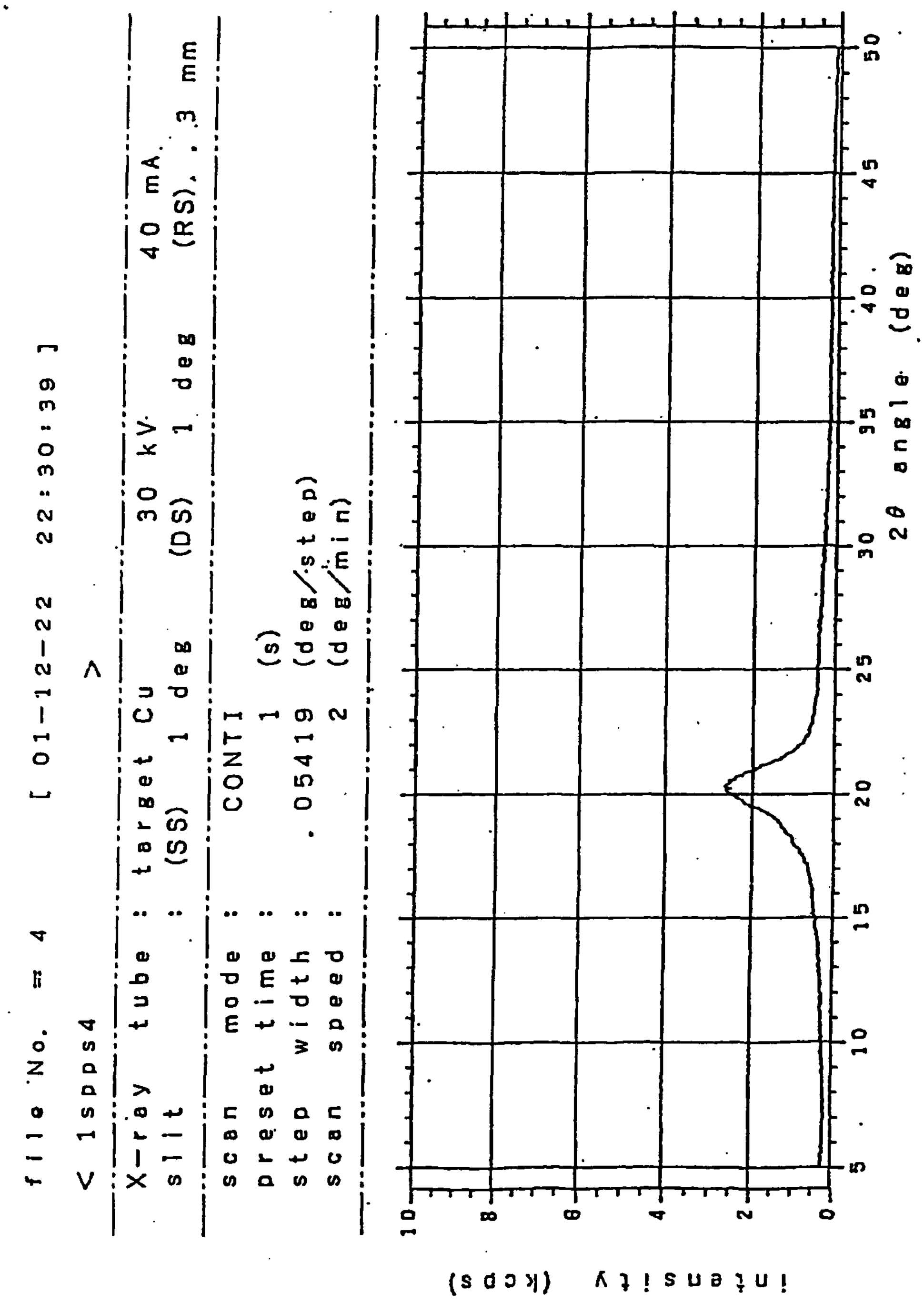
file No. = 4 [ 01-12-22 22:30:39 ]
< 1spps4 >
X-ray tube : target Cu 30 kV 40 mA
slit : (SS) 1 deg (DS) 1 deg (RS) .3 mm
scan mode : CONTI
preset time : 1 (s)
step width : .05419 (deg/step)
scan speed : 2 (deg/min)
intensity (kcps)
10
8
6
4
2
0
5
10
15
20
25
30
35
40
45
50
2θ angle (deg)

FIG. 6

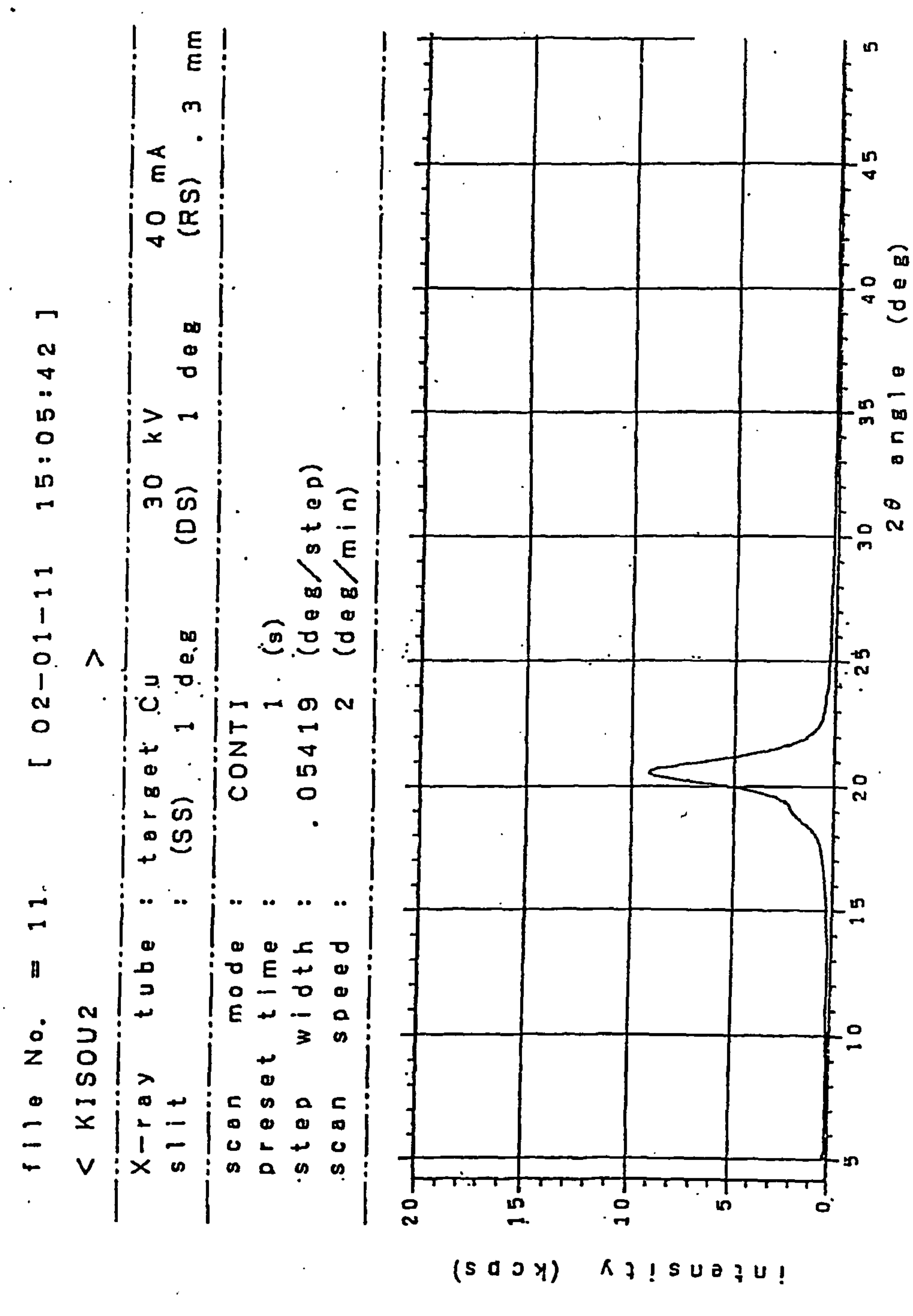
file No. = 11
[ 02-01-11 15:05:42 ]
< KISOU2 >
X-ray tube : target Cu 30 kV 40 mA
slit : (SS) 1 deg (DS) 1 deg (RS) .3 mm
scan mode : CONTI
preset time : 1. (s)
step width : .05419 (deg/step)
scan speed : 2 (deg/min)
intensity (kcps)
20
15
10
5
0
5
10
15
20
25
30
35
40
45
2θ angle (deg)

FIG. 7

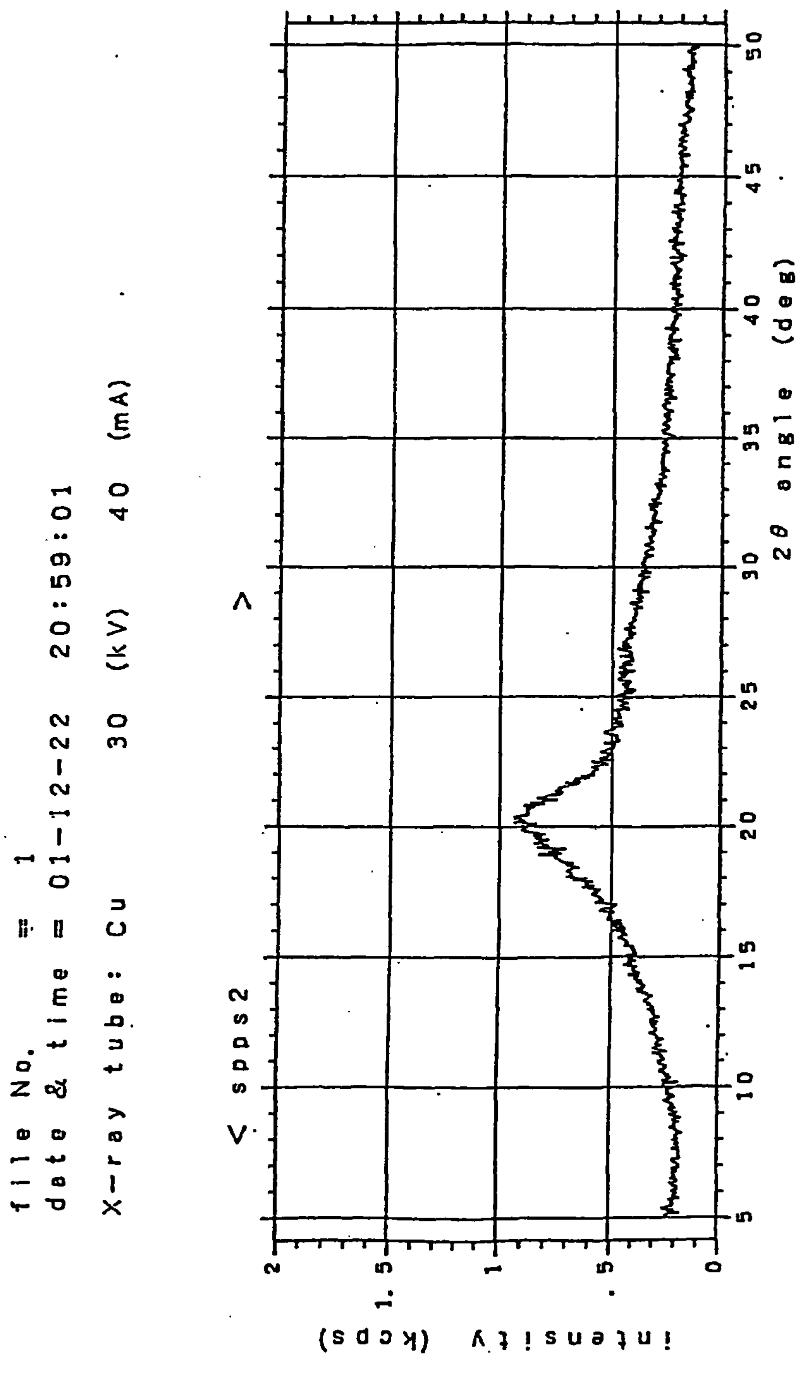
file No. = 1
date & time = 01-12-22 20:59:01
X-ray tube: Cu 30 (kV) 40 (mA)
< spps2 >
2θ angle (deg)
5
10
15
20
25
30
35
40
45
50
intensity (kcps)
0
.5
1
1.5
2

FIG. 8

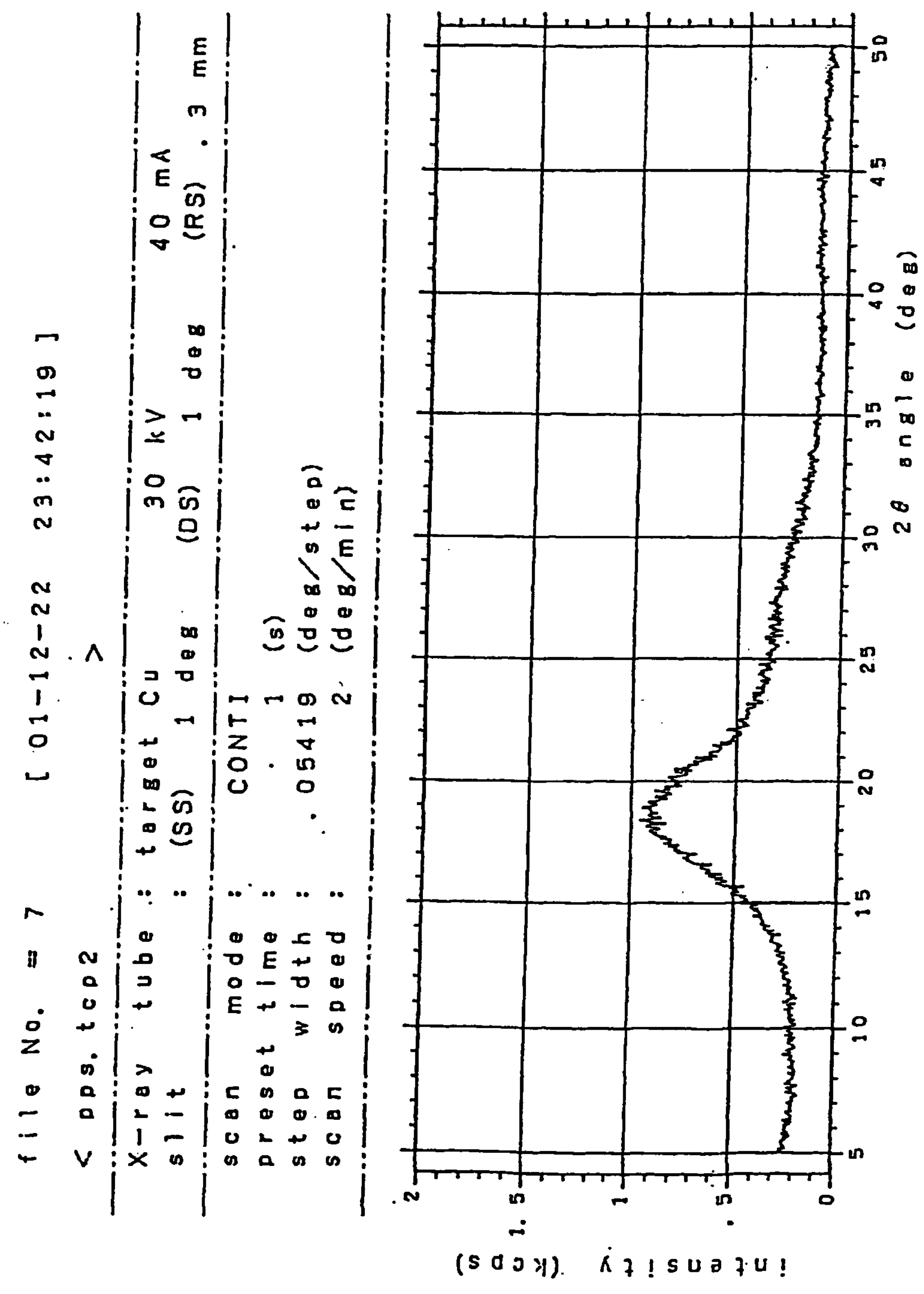
file No. = 7 [ 01-12-22 23:42:19 ]
< pps.tcp2 >
X-ray tube : target Cu 30 kV 40 mA
slit : (SS) 1 deg (DS) 1 deg (RS) .3 mm
scan mode : CONTI
preset time : 1 (s)
step width : .05419 (deg/step)
scan speed : 2 (deg/min)
intensity (kcps)
2
1.5
1
.5
0
5
10
15
20
25
30
35
40
45
50
2θ angle (deg)

FIG. 9

## INTERNATIONAL SEARCH REPORT

International application No.
PCT/JP03/11322

A. CLASSIFICATION OF SUBJECT MATTER
Int.Cl$^7$ H01M8/02, H01M8/10, H01B1/06, H01B13/00

According to International Patent Classification (IPC) or to both national classification and IPC

B. FIELDS SEARCHED

Minimum documentation searched (classification system followed by classification symbols)
Int.Cl$^7$ H01M8/02, H01M8/10, H01B1/06, H01B13/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JOIS

C. DOCUMENTS CONSIDERED TO BE RELEVANT

| Category* | Citation of document, with indication, where appropriate, of the relevant passages | Relevant to claim No. |
|---|---|---|
| A | EP 0967674 A1 (HONDA GIKEN KOGYO KABUSHIKI KAISHA), 29 December, 1999 (29.12.99), & JP 2000-38472 A & US 6124060 A | 1,3-16,17, 19-28 |
| A | EP 1085590 A (Honda Giken Kogyo Kabushiki Kaisha), 21 March, 2001 (21.03.01), & JP 2001-81220 A | 1,3-16,17, 19-28 |
| A | EP 1085051 A (Honda Giken Kogyo Kabushiki Kaisha), 21 March, 2001 (21.03.01), & JP 2001-158806 A | 1,3-16,17, 19-28 |

[x] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 December, 2003 (10.12.03) | Date of mailing of the international search report<br>24 December, 2003 (24.12.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/11322

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-105200 A (Kaneka Corp.), 10 April, 2002 (10.04.02), (Family: none) | 1-16,17-28 |
| A | Yoshihiko NAKANO, Hobuson J. Roisu, Hideyuki OZU, Mao YAMAGUCHI, Shuji HAYASE, "Chokusetsu Methanol-gata Nenryo Denchiyo Proton Dendomaku no Kaihatsu (II)", Polymer Preprints, Japan, Vol.51, No.11, 18 September, 2002 (18.09.02), pages 2794 to 2795 | 1,3-16,17, 19-28 |
| X<br><br>Y | JP 11-354140 A (Toyota Central Research And Development Laboratories, Inc.), 24 December, 1999 (24.12.99), Full text; Figs. 1 to 2 (Family: none) | 2-5,7-9, 13-16<br>11-12 |
| X<br><br>Y | Ikki IIDA, Akihiko TANIOKA, "Kesshosei Polystyrene o Mochiita Kadenmaku no Sakusei to Bussei", Polymer Preprints, Japan, Vol.49, No.3, 12 May, 2000 (12.05.00), page 668 | 2-5,8-9, 13-16<br>7,11-12 |
| Y | WO 97/05191 A1 (HOECHST AG.), 13 February, 1997 (13.02.97), Full text & DE 19527435 A1 & JP 11-510198 A & US 6096856 A | 2-9,11-16, 18,20-22, 26-28 |
| Y | JP 62-55133 A (Mitsubishi Petrochemical Co., Ltd.), 10 March, 1987 (10.03.87), Full text; Figs. 1 to 5 (Family: none) | 2-9,11-16, 18,20-22, 26-28 |
| Y | WO 01/06586 A1 (Asahi Glass Co., Ltd.), 25 January, 2001 (25.01.01), Page 6 (Family: none) | 7 |
| Y | WO 00/49069 A1 (PARONEN, Mikael), 24 August, 2000 (24.08.00), Full text & JP 2002-537428 A | 11-12,26-28 |
| Y | JP 2001-216837 A (Toyota Motor Corp.), 10 August, 2001 (10.08.01), Full text; Figs. 1 to 8 (Family: none) | 11-12,26-28 |
| P,A | JP 2003-68327 A (Kaneka Corp.), 07 March, 2003 (07.03.03), (Family: none) | 1-16,17-28 |
| E,A | JP 2003-288916 A (Kaneka Corp.), 10 October, 2003 (10.10.03), (Family: none) | 1-16,17-28 |

Form PCT/ISA/210 (continuation of second sheet) (July 1998)

**INTERNATIONAL SEARCH REPORT**

International application No.
PCT/JP03/11322

Continuation of Box No. II of continuation of first sheet(1)

Where a group of inventions is claimed, the requirement of unity of invention shall be fulfilled only when there is a special technical feature which links the group of inventions so as to form a single general inventive concept. A group of inventions according to claims 1 to 28 are found to be linked only in a matter of "a proton conducting polymer".

However, it is clear that this matter is a known technical matter and thus cannot be a special technical matter also from the description in the section of "background technology" in the present application. Accordingly, there is no special technical feature among a group of inventions according to claims 1 to 28, which links them so as to form a single general inventive concept.

Therefore, it is clear that a group of inventions according to claims 1 to 28 does not comply with the requirement of unity of invention.

The number of groups of inventions described in the claims in this international application which are so linked as to form general inventive groups, that is, the number of inventions is considered in the following.

It seems from the manner of specification of inventions described in the independent claims that inventions described in the claims in this international application are composed of four inventions classified into claim 1, claim 2, claim 17 and claim 18. However, claim 1 and claim 17 are linked by the proton conducting polymer film itself according to claim 1, and, claim 2 and claim 18 are linked by the proton conducting polymer film itself according to claim 2. Claim 3 to 16 describe two inventions being linked to any of claims 1 and 2, claim 19 describes an invention classified into claim 17, which is linked with claim 1, and claim 20 to 28 describe two inventions classified into each of claim 17 and claim 18, each of which is linked to claim 1 or claim 2, respectively.

Accordingly, this international application describes two inventions.

Form PCT/ISA/210 (extra sheet) (July 1998)

**INTERNATIONAL SEARCH REPORT**

International application No.
PCT/JP03/11322

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

Where a group of inventions is claimed, the requirement of unity of invention shall be fulfilled only when there is a special technical feature which links the group of inventions so as to form a single general inventive concept. As is described in the extra sheet, in the claims of this international application, two inventions are described.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)